# EUROPÄISCHE PATENTSCHRIFT

(11) **EP 3 868 559 B1**
(45) Veröffentlichungstag und Bekanntmachung des Hinweises auf die Patenterteilung: **31.12.2025**
(21) Anmeldenummer: 20158525.4
(22) Anmeldetag: 20.02.2020
(51) Int. Cl.: H04N 1/60, B41F 33/00

(54) **VERFAHREN ZUR ÜBERNAHME ANALOGER VORLAGEN IN DEN DEKORDRUCK**
METHOD FOR TRANSFERRING ANALOG TEMPLATES TO A DECOR PRINT
PROCÉDÉ D'ADOPTION DES MODÈLES ANALOGIQUES DANS L'IMPRESSION DE DÉCORS

(43) Veröffentlichungstag der Anmeldung: 25.08.2021
(73) Patentinhaber: Flooring Technologies Ltd., Kalkara SCM1001 (MT)
(72) Erfinder: DICKE, Sebastian, 16868 Bantikow (DE)
(74) Vertreter: Maikowski & Ninnemann Patentanwälte Partnerschaft mbB

(56) Entgegenhaltungen:
- EP-A1- 3 578 939
- DE-A1- 102009 019 545
- DE-A1- 102017 202 031
- DE-B3- 102015 106 770

## Beschreibung

### Gebiet der Erfindung

Die Erfindung stellt ein Verfahren und eine Vorrichtung zur Übernahme analoger Dekorvorlagen in den Dekordruck bereit, umfassend den Ähnlichkeitsvergleich zwischen mindestens einem von 1 bis n hyperspektralen digitalen Referenzbildern der analogen Dekorvorlage und mindestens einem von 1 bis n hyperspektralen digitalen Ist-Bildern eines dekorversehenen Trägermaterials, wobei ein dekorspezifisches Profiltarget so angepasst wird, dass die digitale Vorlage der analogen Dekorvorlage auf ein Trägermaterial durch ein Ausgabemedium derart ausgegeben werden kann, dass die Farbabweichung zwischen mindestens einem von 1 bis n Referenzbildern der analogen Dekorvorlage und mindestens einem von 1 bis n Ist-Bildern des dekorversehenen Trägermaterials unterhalb eines vorgegebenen Sollwertes liegt.

### Beschreibung

Die Farbe ist ein wesentliches Merkmal eines Druckdekors, welches durch verschiedene Techniken, wie z.B. Tiefdruck oder Digitaldruck erzeugt wird. Bei jeder dieser Techniken wird die gewünschte Erscheinung des Drucks durch Überlagerung von verschiedenen Pigmentschichten der Grundfarben erzielt. Das Tiefdruckverfahren ist eine Drucktechnik, bei der die abzubildenden Elemente als Vertiefungen in einer Druckform z.B. einer Druckwalze vorliegen, die vor dem Druck eingefärbt wird. Die Druckfarbe befindet sich vornehmlich in den Vertiefungen und wird aufgrund von Anpressdruck der Druckform und von Adhäsionskräften auf den zu bedruckenden Gegenstand übertragen. Beim Digitaldruck hingegen wird das Druckbild direkt von einem Computer in einen Digitaldrucker wie z.B. ein Laserdrucker oder Tintenstrahldrucker übertragen, wobei die Verwendung von statischen Druckformen entfällt. Beim Digitaldruck werden üblicherweise die Grundfarben Cyan, Magenta, Gelb und Schwarz (CMYK) verwendet. Das CMYK-Farbmodel ist ein subtraktives Farbmodel, wobei die Abkürzung CMYK für die drei Farbbestandteile Cyan, Magenta, Yellow und den Schwarzanteil Key als Farbtiefe steht. Mit diesem Farbsystem lässt sich ein Farbraum (Gamut) abbilden, der vielen Anforderungen aus verschiedensten Bereichen genügt.

Druckdekore finden beispielsweise Einsatz in der Herstellung von Fußbodenlaminat oder in Form von Wand- und Deckenverkleidungselementen Zur Dekorierung der Holzwerkstoffplatten gibt es mehrere Ansätze. So wurde in der Vergangenheit häufig die Beschichtung von Holzwerkstoffplatten mit einem Dekorpapier genutzt, wobei der Vielfältigkeit an verschiedengemusterten Dekorpapieren keine Grenzen gesetzt sind. Als Alternative zur Verwendung von Dekorpapieren auf Holzwerkstoffplatten hat sich die Möglichkeit des direkten Bedruckens von Holzwerkstoffplatten entwickelt, wobei ein Bedrucken von Papier und dessen nachträgliches Kaschieren oder Direktbeschichten auf die Holzwerkstoffplatten entfällt. Die hierbei hauptsächlich zum Einsatz kommenden Drucktechniken sind die bereits erwähnten Tiefdruck- und Digitaldruckverfahren. Für die Verwendung dieser Druckverfahren liegt das Druckdekor als digitale Vorlage vor, die die Farben und Farbeverteilung des Druckdekors abbildet.

Eine große Herausforderung stellt dabei das Digitalisieren und anschließende farbgetreue Drucken von analogen Dekorvorlagen dar. Bei der Bereitstellung von digitalen Daten für die Erzeugung von dekorativen Oberflächen für unterschiedliche Produkte wie Möbel, Fußboden, Paneele, Wandverkleidungen, Fassaden und anderer Bedarfsgegenstände werden zunächst Vorlagen bzw. Motive von verschiedenster Herkunft bereitgestellt. Diese können je nach Bedarf aus unterschiedlichen Quellen stammen. So können zum einen natürliche Produkte wie Holz oder Stein genutzt werden oder zum anderen können auch andere Vorlagen verwendet werden, die durch weitere Drucktechniken wie dem Tiefdruck, Siebdruck oder auch mittels manueller Herstellung erzeugt wurden. Diese Vorlagen werden anschließend unter Verwendung eines Scanners digitalisiert, wobei die heutzutage zum Einsatz kommenden Scanner in der Lage sind, großformatige Vorlagen in einem Scan zu digitalisieren. Besonders solche analogen Dekorvorlagen, die häufig in der Natur vorkommende Dekore umfassen, sind bei Kunden sehr beliebt. Eine farbgetreue Wiedergabe dieser Dekore ist daher von großem wirtschaftlichem Interesse.

Beim Digitalisieren der analogen Vorlage wird in konventionellen Verfahren ein Digitalbild der analogen Dekorvorlage erstellt, welches anschließend für den industriellen Druckprozess genutzt werden kann. Ein Digitalbild besteht dabei unter anderem aus einer Mehrzahl von Bildpunkten, die in einer Bilddatei abgespeichert werden. Die Bildpunkte (Pixel) weisen jeweils einen Farbwert bezüglich eines für das Digitalbild definierten Farbsystems auf. Durch das Darstellen des Farbwertes jedes einzelnen Bildpunktes ergibt sich für die menschliche Wahrnehmung aus den Einzelbildpunkten zusammengesetzt ein entsprechendes Bild. Häufig verwendete Farbsysteme sind beispielsweise CMYK, RGB oder auch spezifische Farbsysteme wie sRGB oder ISOcoatedv2_CMYK. Die einzelnen Farbsysteme spannen dabei einen Farbraum auf, der die in dem Digitalbild enthaltenen möglichen Farben repräsentiert.

Das Problem dabei ist, dass durch das Digitalisieren ein gerätespezifisches digitales Bild der analogen Dekorvorlage entsteht, dessen Farbwerte vom bei der Digitalisierung zu Grunde gelegten Farbsystem abhängt und damit häufig nicht farbgetreu zur analogen Dekorvorlage ist. Zum anderen unterscheidet sich häufig das bei der Digitalisierung zu Grunde gelegte Farbsystem von dem Farbsystem, das beim Drucken des Dekors verwendet wird.

Ein bisher nicht befriedigend gelöstes Problem, das in allen Bereichen der farbbasierten bzw. farbverarbeitenden Industrie ein zentrales Thema darstellt, ist die Erreichung eines hohen Grades an Farbtreue, in anderen Worten, die Fähigkeit, vorgegebene Farben mit minimaler chromatischer Differenz in Bezug auf ein Original zu reproduzieren. Ein wesentlicher Schritt, um dieses Problem zu lösen, ist die Analyse der Farbzusammensetzung eines vorgegebenen Originals.

Die DE 10 2010 007 125 A1 betrifft ein Verfahren zur Bereitstellung und Verwendung von Dekordaten. Die Dekordaten werden dabei durch das Scannen von Mustern existierender Dekore, Schichtstoffe und/oder Echtmaterialien gewonnen. Kern des Verfahrens ist ein Dekordatenmanagement unter Verwendung einer zentralen Dekordatenbank. Die farbgetreue Wiedergabe der real existierenden Muster, die im Verfahren digitalisiert wurden durch einen Druckprozess ist nicht Gegenstand des Verfahrens.

Die DE 10 2017 202 031 A1 befasst sich mit einer Korrektur von Farbabweichungen in Digitaldruckmaschinen. Ziel des Verfahrens ist es eine farbgetreue Wiedergabe einer digitalen Druckvorlage im Druckprozess zu ermöglichen. Das Digitalisieren und anschließende Drucken einer real existierenden Dekorvorlage ist mit dem beschriebenen Verfahren nicht möglich.

Die EP 3 020 565 B1 befasst sich mit einem Verfahren zur Erzeugung von farb- und detailgetreuen Wiedergaben eines Druckdekors mit verschiedenen Drucktechniken. Gegenstand des Verfahrens ist es Dekordrucke auf Trägermaterialien mit vergleichbarere Qualitätsanmutung zu erzeugen, unabhängig ob das Dekor digital oder analog gedruckt wurde. Ein Ähnlichkeitsvergleich zu einer analogen also real existierenden Dekorvorlage ist in dem Verfahren nicht vorgesehen. Die farbgetreue Wiedergabe einer analogen Dekorvorlage ist nicht Gegenstand des Verfahrens.

EP 3 578 939 A1 befasst sich mit einem Verfahren zur Online-Qualitätskontrolle von Dekordrucken auf Trägermaterialien. Gemäß der EP 3 578 939 A1 wird mindestens ein hyperspektrales digitales Bild eines Druckdekors erzeugt. Das Druckdekor wird anschließend mittels des mindestens einen hyperspektralen Bildes kalibriert und ein digitales Soll-Bild mit einer Auflösung im Bereich von 4 bis 36 Megapixel des Druckdekors erzeugt. Ein Druckdekor wird auf mindestens einem Trägermaterial erstellt und mindestens ein Ist-Bild von dem gedruckten Dekor erzeugt. Die Farbabweichungen zwischen dem Ist-Bild und dem Soll-Bild werden ermittelt und anschließend wird ein weiteres Trägermaterial derart bedruckt, das die Farbabweichungen zwischen dem Soll-Bild und dem Ist-Bild unterhalb eines vorgegebenen Sollwertes liegt.

DE 10 2009 019545 A1 befasst sich mit einem Verfahren und einer Vorrichtung zur Durchführung eines optischen Vergleichs zwischen zumindest zwei Mustern, vorzugsweise durch Vergleich von auswählbaren Ausschnitten. Das zu untersuchende Muster wird mit Streulicht ausgeleuchtet und vom reflektierten Licht wird mittels eines Spektrometers ein Interferenzspektrum erzeugt.

Aufgabe der vorliegenden Erfindung ist es daher, ein Verfahren zur Verfügung zu stellen, mit dem analoge Dekorvorlagen farbgetreu in den Dekordruck, insbesondere in den digitalen Dekordruck, übernommen werden können.

Diese Aufgabe löst die vorliegende Erfindung durch ein Verfahren gemäß Anspruch 1 und eine Vorrichtung gemäß Anspruch 7.

Insbesondere stellt die Erfindung ein Verfahren zur Übernahme analoger Dekorvorlagen in den Dekordruck, umfassend einen Ähnlichkeitsvergleich zwischen mindestens einem von 1 bis n hyperspektralen digitalen Referenzbildern einer analogen Dekorvorlage und mindestens einem von 1 bis n hyperspektralen digitalen Ist-Bildern eines dekorversehenen Trägermaterials, wobei n zwischen 1 und 100 liegt,
dadurch gekennzeichnet, dass das Verfahren die Schritte umfasst:
a) Aufnehmen und Speichern von 1 bis n hyperspektralen digitalen Referenzbildern der gesamten analogen Dekorvorlage oder von 1 bis n Ausschnitten der analogen Dekorvorlage mit einer Hyperspektralkamera oder einem Hyperspektralscanner, wobei jedes hyperspektrale digitale Referenzbild einen hyperspektralen Datenwürfel mit zwei räumlichen und einer spektralen Dimension aufweist;
b) Erstellen eines dekorspezifischen Referenztargets aus den 1 bis n hyperspektralen digitalen Referenzbildern, wobei das Erstellen eines dekorspezifischen Referenztargets aus den 1 bis n hyperspektralen digitalen Referenzbildern das Zusammensetzten der einzelnen hyperspektralen digitalen Referenzbildern mittels einer Grafiksoftware zusammengesetzt umfasst, wenn n>1, und wobei das dekorspezifische Referenztarget die dekorspezifischen Farbwerte der analogen Druckvorlage beinhaltet, wobei die am häufigsten in den 1 bis n hyperspektralen Referenzbildern vorkommenden Farbwerte als dekorspezifische Farbwerte abgebildet werden, und wobei die dekorspezifischen Farbwerte der digitalen Vorlage der analogen Dekorvorlage in Farbfeldern dargestellt werden;
c) Erstellen einer digitalen Vorlage der analogen Dekorvorlage durch Einscannen oder Fotografieren der analogen Dekorvorlage mit einem digitalen Fotoapparat oder einer Digitalkamera;
d) Erstellen eines dekorspezifischen Profiltargets aus der digitalen Vorlage der analogen Dekorvorlage durch eine Recheneinheit, wobei ein oder mehrere Ausschnitte der digitalen Vorlage der analogen Dekorvorlage verwendet werden, die einen identischen Ausschnitt oder identische Ausschnitte des Dekors wie die 1 bis n digitalen hyperspektralen Referenzbilder abbilden; und
   wobei das dekorspezifische Profiltarget die dekorspezifischen Farbwerte der digitalen Vorlage der analogen Dekorvorlage beinhaltet, wobei die am häufigsten in der digitalen Vorlage der analogen Dekorvorlage ermittelten Farbwerte die dekorspezifischen Farbwerte der digitalen Vorlage der analogen Dekorvorlage bilden, und wobei die dekorspezifischen Farbwerte der digitalen Vorlage der analogen Dekorvorlage in Farbfeldern dargestellt werden;
e) Berechnen und anschließendes Speichern eines korrigierten dekorspezifischen Profiltargets aus dem dekorspezifischen Referenztarget und dem dekorspezifischen Profiltarget durch Vergleichen der Farbwerte der Farbfelder des dekorspezifischen Profiltargets mit den Farbwerten der Farbfelder des dekorspezifischen Referenztargets und Korrektur der Farbwerte der Farbfelder des dekorspezifischen Profiltargets, die vom Farbwert des zugeordneten Farbfeldes des dekorspezifischen Referenztargets abweichen derart, dass die Farbwerte des korrigierten dekorspezifischen Profiltargets den Farbwerten des dekorspezifischen Referenztargets entsprechen;
f) Ausgeben der digitalen Vorlage der analogen Dekorvorlage unter Berücksichtigung des korrigierten dekorspezifischen Profiltargets auf ein Trägermaterial durch ein Ausgabegerät;
g) Erzeugen von 1 bis n hyperspektralen digitalen Ist-Bildern von dem dekorversehenen Trägermaterial, wobei die 1 bis n hyperspektralen digitalen Ist-Bilder von den gleichen Ausschnitten des Dekors aufgenommen werden, wie die 1 bis n hyperspektralen digitalen Referenzbilder;
h) Ermittlung einer Farbabweichung und eines Ähnlichkeitsindex zwischen mindestens einem der 1 bis n hyperspektralen digitalen Ist-Bilder des dekorversehenen Trägermaterials und mindestens einem der 1 bis n hyperspektralen digitalen Referenzbilder, wobei der Ähnlichkeitsvergleich immer zwischen einem Bildpaar stattfindet, welches von einem Ist-Bild und einem Referenzbild gebildet wird, welche einen identischen Ausschnitt des Dekors abbilden; und
i) Anpassen des korrigierten dekorspezifischen Profiltargets unter Berücksichtigung der ermittelten Farbabweichungen wenn der Ähnlichkeitsindex unterhalb eines vorgegebenen Sollwertes liegt indem die Farbwerte im korrigierten dekorspezifischen Profiltarget unter Berücksichtigung der im Ähnlichkeitsvergleich ermittelten Farbabweichungen geändert werden; Speichern des angepassten korrigierten dekorspezifischen Profiltargets und anschließendes Ausgeben der digitalen Vorlage der analogen Dekorvorlage unter Berücksichtigung des angepassten korrigierten dekorspezifischen Profiltargets auf ein Trägermaterial durch ein Ausgabegerät, wobei die gleiche Art Trägermaterial und das gleiche Ausgabegerät verwendet wird wie in Verfahrensschritt f) und wiederholen der Schritte g) bis i);

wobei eine Anpassung des korrigierten dekorspezifischen Profiltargets gemäß Verfahrensschritt i) so lange durchgeführt wird, bis der Ähnlichkeitsindex zwischen mindestens einem der 1 bis n hyperspektralen digitalen Ist-Bildern und mindestens einem der 1 bis n hyperspektralen digitalen Referenzbilder oberhalb eines vorgegebenen Sollwertes liegt; und
wobei der Sollwert im Bereich von 75% bis 100% liegt.

Das Erzeugen eines hyperspektralen digitalen Bildes erfolgt mittels eines hyperspektralen Systems, wie beispielsweise mit einer Hyperspektralkamera oder vorzugsweise mittels eines Hyperspektralscanners. Unter "hyperspektral" versteht man dabei, dass ein Bild von sehr vielen, eng beieinanderliegenden Wellenlängen aufgezeichnet wird. Das Auge sieht die Umwelt multispektral in den Wellenlängen der Grundfarben Rot, Grün und Blau. Hyperspektrale Systeme hingegen zeichnen Daten von 20 bis 250 Kanälen auf, die von Wellenlängen im ultravioletten Bereich bis zum langwelligen Infrarot reichen. Das hyperspektrale Bild enthält damit mehr Farbinformationen, als das menschliche Auge vom gleichen Bild wahrnimmt. Dies wird erfindungsgemäß genutzt, um einen für das menschliche Auge farbgetreuen Dekordruck einer analogen Druckvorlage zu ermöglichen.

Im Stand der Technik ist ein entsprechendes Verfahren zur Erzeugung hyperspektraler Bilder als ACMS^{®} (Advanced Colour Measurement System) bekannt. Hyperspektrale Systeme verfügen über eine Vielzahl von Detektoren. Als Ergebnis der Aufzeichnung entsteht ein hyperspektraler Datenwürfel mit zwei räumlichen und einer spektralen Dimension. Zur Erzeugung dieses hyperspektralen Datenwürfels stehen vier grundlegende Techniken zur Verfügung. Mit einem so genannten Schnappschuss wird der gesamte Datensatz mit einem einzigen Detektor-Output geliefert. Beim räumlichen Scannen liefert jeder Detektor-Output das Spektrum von einem schmalen Streifen der Vorlage. Beim spektralen Scannen liefert jeder Detektor-Output eine monochromatische, räumliche Karte der Vorlage. Beim räumlichspektralen Scannen liefert jeder Detektor-Output eine spektral kodierte, räumliche Karte der Vorlage.

Vorteilhaft an der Verwendung eines hyperspektralen Bildes gemäß der vorliegenden Erfindung ist es weiterhin, dass diese Bilder mit hoher Geschwindigkeit aufgenommen werden können. Die erhöht die Effizienz im Produktionsprozess und damit die Wirtschaftlichkeit des erfindungsgemäßen Verfahrens.

In Schritt a) des erfindungsgemäßen Verfahrens werden von der analogen Dekorvorlage 1 bis n hyperspektrale digitale Bilder aufgenommen. n liegt dabei zwischen 1 bis 100, bevorzugt zwischen 1 bis 50, besonders bevorzugt zwischen 1 bis 10. Bei Holzdekoren beispielsweise liegt n bevorzugt zwischen 1 bis 3.

Die 1 bis n hyperspektralen digitalen Bilder der analogen Dekorvorlage dienen als Referenzbilder der analogen Dekorvorlage. In einer Ausführungsform der Erfindung wird mit den 1 bis n hyperspektralen digitalen Bildern die gesamte analoge Dekorvorlage abgebildet. In einer bevorzugten Ausführungsform der Erfindung bilden die 1 bis n hyperspektralen digitalen Bilder der analogen Dekorvorlage 1 bis n Ausschnitte der analogen Dekorvorlage ab, die besonders charakteristisch für die analoge Dekorvorlage sind. Das heißt, es werden Ausschnitte abgebildet, die das analoge Dekor und dessen farbliche Gestaltung besonders gut wiedergeben.

In einer bevorzugten Ausführungsform der Erfindung bilden die 1 bis n hyperspektralen digitalen Referenzbilder daher einen Ausschnitt oder Ausschnitte der analogen Dekorvorlage ab, die für das Dekor charakteristisch sind.

Analoge Dekorvorlagen gemäß der vorliegenden Erfindung sind Dekorvorlagen, die, wie eingangs bereits beschrieben, physisch vorliegen. Grundsätzlich sind damit alle Arten von natürlichen und gedruckten Vorlagen Einsetzbar. Beispiele für solche Dekorvorlagen sind Holzmaserungen von Holzdekoren, Natursteindekore, analog gedruckte Vorlagen auf Papier und mechanisch gedruckte Vorlagen auf verschiedenen Werkstoffen.

Im Verfahrensschritt (b) wird erfindungsgemäß ein dekorspezifisches Referenztarget aus den 1 bis n hyperspektralen digitalen Referenzbildern erstellt, wobei das Erstellen des dekorspezifischen Referenztargets aus den 1 bis n hyperspektralen digitalen Referenzbildern das Zusammensetzten der einzelnen hyperspektralen digitalen Referenzbildern mittels einer Grafiksoftware zusammengesetzt umfasst, wenn n>1. Grafiksoftware die für diese Aufgabe geeignet ist, ist dem Fachmann bekannt.

Das dekorspezifische Referenztarget beinhaltet die dekorspezifischen Farbwerte der analogen Druckvorlage. Die Farbwerte werden erfindungsgemäß in genormten Farbfeldern dargestellt, wobei das gesamte Farbfeld durch einen Farbwert repräsentiert wird. Dabei ist jedem Farbfeld ein bestimmter Farbwert zugeordnet, sodass ein solches Farbfeld auf dem Profiltarget eindeutig auffindbar ist. Typische Anzahlen von Farbfelder in einem Referenztarget sind dem Fachmann bekannt. Ein dekorspezifisches Referenztarget kann beispielsweise zwischen 300 und 5000 Farbfeldern, bevorzugt zwischen 300 und 3000 Farbfelder, besonders bevorzugt zwischen 300 und 800 Farbfeldern umfassen. Für die Farbwerte in den Farbfeldern können beispielsweise Farbsysteme wie CMYK, RGB oder auch spezifische Farbsysteme wie sRGB oder ISOcoatedv2_CMYK verwendet werden.

Das Ermitteln der dekorspezifischen Farbwerte der analogen Druckvorlage erfolgt dabei in Abhängigkeit von der Häufigkeit der einzelnen Farbwerte in den 1 bis n hyperspektralen Referenzbildern der analogen Druckvorlage mittels einer Recheneinheit und damit automatisiert. In einer Ausführungsform der Erfindung werden dabei alle Farbwerte, die in den 1 bis n Referenzbildern vorkommen, als dekorspezifische Farbwerte in dem dekorspezifischen Referenztarget dargestellt. Erfindungsgemäß werden die am häufigsten in den 1 bis n Referenzbildern vorkommenden Farbwerte als dekorspezifische Farbwerte in dem dekorspezifischen Referenztarget abgebildet. In diesem Fall werden so viele Farbwerte abgebildet, bis die maximal mögliche Anzahl von Farbwerten für das dekorspezifische Referenztarget erreicht ist. Das dekorspezifische Referenztarget beinhaltet damit die für die analoge Dekorvorlage charakteristischen Farbwerte.

Erfindungsgemäß beinhaltet das dekorspezifische Referenztarget daher die dekorspezifischen Farbwerte der analogen Dekorvorlage.

Aus einer digitalen Vorlage der analogen Dekorvorlage wird im Verfahrensschritt d) ein dekorspezifisches Profiltarget erstellt, wobei ein oder mehrere Ausschnitte der digitalen Vorlage der analogen Dekorvorlage verwendet werden, die einen identischen Ausschnitt oder identische Ausschnitte des Dekors wie die 1 bis n digitalen hyperspektralen Referenzbilder abbilden.

Dies geschieht analog zu der Erstellung des dekorspezifischen Referenztargets in Abhängigkeit von der Häufigkeit der Farbwerte im digitalen Bild der digitalen Vorlage der analogen Dekorvorlage. Das heißt, es werden wiederum die häufigsten Farbwerte ermittelt und diese werden als dekorspezifische Farbwerte der digitalen Vorlage der analogen Dekorvorlage im dekorspezifischen Profiltarget dargestellt. Das dekorspezifische Profiltarget beinhaltet daher die für die digitale Vorlage der analogen Dekorvorlage charakteristischen Farbwerte. Das Erstellen des dekorspezifischen Profiltargets geschieht mittels einer Recheneinheit und damit ebenfalls automatisiert. Erfindungsgemäß beinhaltet das dekorspezifische Profiltarget die dekorspezifischen Farbwerte der digitalen Vorlage der analogen Dekorvorlage.

Bilden die 1 bis n Referenzbilder nicht die gesamte analoge Dekorvorlage ab, sondern lediglich Ausschnitte aus dieser, so werden für die Erstellung des dekorspezifischen Profiltargets vorzugsweise die identischen Ausschnitte des Dekors der digitalen Vorlage der analogen Dekorvorlage verwendet. Das heißt, es werden die Farbwerte für die Erstellung des dekorspezifischen Profiltargets verwendet, die in dem entsprechenden Ausschnitt oder die in den entsprechenden Ausschnitten des Dekors der digitalen Vorlage der analogen Dekorvorlage vorkommen. In Abhängigkeit von der Häufigkeit der Farbwerte bilden diese die dekorspezifischen Farbwerte, die in dem dekorspezifischen Profiltarget dargestellt werden. In einer Ausführungsform der Erfindung bilden alle Farbwerte, die in dem Ausschnitt oder den Ausschnitten der digitalen Vorlage der analogen Dekorvorlage vorkommen, die dekorspezifischen Farbwerte, die im dekorspezifischen Profiltarget dargestellt werden. Erfindungsgemäß werden die am häufigsten in dem Ausschnitt oder den Ausschnitten der digitalen Vorlage der analogen Dekorvorlage vorkommenden Farbwerte als dekorspezifische Farbwerte in dem dekorspezifischen Profiltarget abgebildet. In diesem Fall werden so viele Farbwerte abgebildet, bis die maximal mögliche Anzahl von Farbwerten für das dekorspezifische Profiltarget erreicht ist.

In einer Ausführungsform der Erfindung werden daher für die Erstellung des dekorspezifischen Profiltargets ein oder mehrere Ausschnitte der digitalen Vorlage der analogen Dekorvorlage verwendet, die einen identischen Ausschnitt oder identische Ausschnitte wie die 1 bis n Referenzbilder abbilden.

Bevorzugt weist das dekorspezifische Profiltarget die gleiche Anzahl an Farbfeldern auf wie das dekorspezifische Referenztarget.

In einer weiteren Ausführungsform der Erfindung kann das dekorspezifische Profiltarget aber auch eine geringere Anzahl an Farbfeldern aufweisen im Vergleich zum dekorspezifischen Referenztarget.

In einer weiteren Ausführungsform der Erfindung, werden nicht nur identische Ausschnitte des Dekors für die Erstellung des dekorspezifischen Referenztargets und des dekorspezifischen Profiltargets verwendet, sondern auch innerhalb identischer Ausschnitte die exakt gleichen Positionen für die Bestimmung der Farbwerte der Farbfelder. Die ist besonders vorteilhaft, wenn die analoge Vorlage besondere Farben enthält.

Bevorzugt werden sowohl das dekorspezifische Referenztarget als auch das dekorspezifische Referenztarget gespeichert.

Erfindungsgemäß wird eine digitale Vorlage der analogen Dekorvorlage durch Einscannen oder Fotografieren der analogen Dekorvorlage erzeugt. Wird die digitale Vorlage der analogen Druckvorlage durch Fotografieren erzeugt, wird ein digitaler Fotoapparat oder eine Digitalkamera verwendet.

Im Verfahrensschritt e) wird ein korrigiertes dekorspezifisches Profiltarget aus dem dekorspezifischen Referenztarget und dem dekorspezifischen Profiltarget berechnet. Dafür werden die Farbwerte der Farbfelder des dekorspezifischen Profiltargets mit den Farbwerten der Farbfelder des dekorspezifischen Referenztargets verglichen. Weichen die Farbwerte eines Farbfeldes des dekorspezifischen Profiltargets vom Farbwert des zugeordneten Farbfeldes des dekorspezifischen Referenztargets ab, werden diese entsprechend korrigiert. Korrektur bedeutet in diesem Zusammenhang, dass die Anteile der einzelnen Bestandteile des für die Farbwerte genutzten Farbsystems verändert werden.

Erfindungsgemäß werden die Farbwerte des dekorspezifischen Profiltargets so korrigiert, dass die Farbwerte des korrigierten dekorspezifischen Profiltargets den Farbwerten des dekorspezifischen Referenztargets entsprechen.

Dieser Vorgang wird durch eine Recheneinheit und damit voll automatisiert durchgeführt. Programme, die diese Arten von Korrekturen vornehmen sind dem Fachmann bekannt. Das so veränderte dekorspezifische Profiltarget bildet das korrigierte dekorspezifische Profiltarget. Das korrigierte dekorspezifische Profiltarget wird vorzugsweise nach der Berechnung gespeichert.

Im Verfahrensschritt f) wird die digitale Vorlage der analogen Dekorvorlage unter Berücksichtigung des korrigierten dekorspezifischen Profiltargets auf ein Trägermaterial durch ein Ausgabegerät ausgegeben. Die Ausgabe der digitalen Vorlage der analogen Dekorvorlage kann dabei erfindungsgemäß mittels digitalem Druck erfolgen. Der digitale Druck kann dabei direkt oder auch indirekt ausgeführt werden. Besonders bevorzugt erfolgt die Ausgabe mittels digitalem Direktdruck. Durch den Verfahrensschritt f) wir ein dekorversehenes Trägermaterial erzeugt.

Wurden bei der Erstellung des dekorspezifischen Referenztargets und des dekorspezifischen Profiltargets nicht nur identische Ausschnitte des Dekors verwendet, sondern auch innerhalb identischer Ausschnitte die exakt gleichen Positionen für die Bestimmung der Farbwerte der Farbfelder, so können bei der Ausgabe der digitalen Vorlage der analogen Dekorvorlage unter Berücksichtigung des korrigierten dekorspezifischen Profiltargets die Farbwerte besonders exakt den jeweiligen Positionen bei der Ausgabe der digitalen Vorlage der analogen Dekorvorlage auf das Trägermaterial zugeordnet werden.

Als Trägermaterialien eignen sich beispielsweise Papier, Glas, Metall, Folien, Holzwerkstoffplatten, insbesondere MDF- oder HDF-Platten, WPC-Platten, Furniere, Lackschichten, Kunststoffplatten und anorganische Trägerplatten. Bevorzugt gemäß der Erfindung sind Holzwerkstoffplatten und Papier.

In einer Ausführungsform der Erfindung wird Papier als Trägermaterial verwendet. Als Druckbasispapier geeignetes Papier ist bevorzugt weiß und hat ein Gewicht von 60 bis 90 g/m², bevorzugt 65 bis 80 g/m², besonders bevorzugt 70 g/m². Das Papier wird vor dem Bedrucken mit einem Primer versehen, um dieses zu grundieren. Geeignete Mittel, die als Primer verwendet werden können, sind dem Fachmann bekannt.

Der digitale Druck zum Bedrucken mindestens einer Seite beispielsweise einer Holzwerkstoffplatte kann unter Verwendung eines Digitaldruckers mit einer wasserbasierten Digitaldrucktinte, einer UV- oder lösungsmittelbasierten Tinte ausgeführt werden. Bevorzugt ist die Verwendung einer wasserbasierten Digitaldrucktinte. Die Menge an verwendeter Digitaldrucktinte kann zwischen 5 und 15 g/m², bevorzugt 6 und 8 g/m² betragen.

In einer Ausführungsform der Erfindung wird die digitale Vorlage der analogen Dekorvorlage auf ein vorgrundiertes Trägermaterial aufgebracht. Insbesondere bei der Verwendung von Holzwerkstoffplatten wird in einer Ausführungsform des vorliegenden Verfahrens auf die zu bedruckende Seite der Holzwerkstoffplatte vor dem Bedrucken mit der digitalen Vorlage der analogen Dekorvorlage mindestens eine Grundierungsschicht umfassend mindestens ein Harz und/oder mindestens einen Lack aufgetragen, die anschließend angetrocknet und/oder angehärtet wird.

Vorzugsweise wird die zu bedruckende Seite der Holzwerkstoffplatte vor dem Auftragen der Grundierung angeschliffen.

Zur Grundierung kann eine wässrige Harzlösung und/oder eine strahlenhärtbare Spachtelmasse auf die zu bedruckende Seite des Trägermaterials aufgetragen werden. Als Grundierungsmittel sind z.B. wässrige Harzlösungen wie Melamin-Formaldehyd-Harz, Harnstoff-Formaldehyd-Harz oder Melamin-Harnstoff-Formaldehyd-Harz einsetzbar. Es ist ebenfalls möglich, das Trägermaterial mit 1K/2K-Acrylat-, UV- und/oder ESH-Spachtel vorzubeschichten bzw. zu grundieren und anschließend diese Grundierungsschicht entsprechend auszuhärten.

Vorzugsweise wird für die Vorbeschichtung bzw. Grundierung der Holzwerkstoffplatte eine wässrige Harzlösung verwendet, die eine wässrige Harzlösung, insbesondere eine wässrige Lösung eines Melamin-Formaldehyd-Harzes, Harnstoff-Formaldehyd-Harzes oder Melamin-Harnstoff-Formaldehyd-Harz.

Die Auftragsmenge an flüssiger Harzlösung zur Grundierung kann zwischen 10 und 80 g/m², bevorzugt 20 und 50 g/m² betragen. Der Feststoffgehalt der wässrigen Harzlösung liegt zwischen 30 und 80%, bevorzugt 40 und 60%, insbesondere bevorzugt bei 55%. Das Flüssigharz kann zusätzlich geeignete Netzmittel, Härter, Trennmittel und Entschäumer aufweisen.

Nach Auftragen der wässrigen Harzlösung auf die Holzwerkstoffplatte zur Vorbeschichtung bzw. Grundierung derselbigen wird das Flüssigharz auf eine Feuchte von 10%, bevorzugt 6% z.B. in einem Konvektionsofen oder Nahinfrarot-Ofen getrocknet.

In einer anderen Ausführungsform des vorliegenden Verfahrens kann die Holzwerkstoffplatte mit 1K/2K-Acrylat-, und/oder ESH-Spachtel vorbeschichtet bzw. grundiert werden. Eine UV-Spachtelmasse besteht vorteilhafterweise im Wesentlichen aus UV-härtbaren Lackkomponenten, Pigmenten, Reaktivverdünner und Radikalbildnern als Kettenstarter.

Die Auftragsmenge der Spachtelmasse kann in diesem Fall 50 bis 150 g/m², bevorzugt 50 bis 100 g/m² betragen. Die Mengenangaben beziehen sich dabei auf eine 100%ige Spachtelmasse.

Ebenfalls ist es möglich, dass die zur Grundierung verwendete Spachtelmasse pigmentiert vorliegt, wodurch das Druckergebnis variiert oder verbessert werden kann.

Besonders bevorzugt gemäß der Erfindung ist die Vorbeschichtung der Holzwerkstoffplatte mit einer transparenten Grundierung.

In einer weiteren Ausführungsform des vorliegenden Verfahrens wird vor dem Bedrucken der mindestens einen Seite der Holzwerkstoffplatte mindestens eine Schicht einer pigmentierten Grundierung, die vorzugsweise wasserbasiert ist, auf die zu bedruckende Seite der Holzwerkstoffplatte aufgetragen. Die pigmentierte Grundierung kann entweder direkt auf die unbehandelte Oberfläche der Werkstoffplatte oder auch auf die vorherige, vorzugsweise transparente Grundierung aufgetragen werden.

Die wasserbasierte pigmentierte Grundierung kann auch in mehr als einer Schicht aufgetragen werden (z.B. 3 bis 10 Schichten, bevorzugt 5 bis 8 Schichten, besonders bevorzugt 7 Schichten), wobei nach jedem Schichtauftrag die pigmentierte Grundierung z.B. in einem Konvektionstrockner oder einem Nahinfrarot-Trockner getrocknet wird. Die wasserbasierte pigmentierte Grundierung enthält vorzugsweise mindestens ein Pigment einer hellen Farbe, besonders bevorzugt mindestens ein Weißpigment.

Weißpigmente sind unbunte anorganische Pigmente mit einem hohen Brechungsindex (größer als 1,8), die vor allem zur Erzeugung von optischer Weiße in Anstrichmitteln oder als Füllstoff in z. B. Kunststoffen verwendet werden. Weißpigmente gemäß der Erfindung können ausgewählt sein aus der Gruppe umfassend Titandioxid, Lithopone, Bariumsulfat, Zinkoxid, Zinksulfid und Calciumsulfat. Lithopone ist ein Weißpigment, das Bariumsulfat und Zinksulfid beinhaltet. Gemäß der Erfindung wird vorzugsweise Titandioxid als Weißpigment in der wasserbasierten pigmentierten Grundierung eingesetzt, da Titandioxid den höchsten Brechungsindex und somit die höchste Deckkraft unter den bekannten Weißpigmenten aufweist.

Im Verfahrensschritt g) werden 1 bis n hyperspektrale digitale Ist-Bilder von dem dekorversehenen Trägermaterial erzeugt, wobei die 1 bis n hyperspektralen digitalen Ist-Bilder identische Ausschnitte des Dekors abbilden, wie die 1 bis n hyperspektralen digitalen Referenzbilder.

In einer bevorzugten Ausführungsform werden die 1 bis n Referenzbilder und die 1 bis n Ist-Bilder gemäß den Verfahrensschritten a) und f) unter gleichwertigen Bedingungen erzeugt. Diese garantiert, dass veränderte Umgebungsbedingungen keinen Einfluss auf die aufgenommenen Bilder und deren Farbwerte haben. Die hyperspektralen digitalen Ist-Bilder werden bevorzugt wie eingangs beschrieben mittels einer Hyperspektralkamera, besonders bevorzugt mittels eines Hyperspektralscanners aufgenommen. In einer besonders bevorzugten Ausführungsform der Erfindung werden die 1 bis n Referenzbilder mit der gleichen Mittel zur Aufnahme von hyperspektralen Bildern aufgenommen, bevorzugt ist dies ein Hyperspektralscanner.

Wie bereits erwähnt, werden die 1 bis n hyperspektralen digitalen Ist-Bilder vorzugsweise von einem Ausschnitt oder den Ausschnitten des Dekors aufgenommen, die auch die 1 bis n hyperspektralen digitalen Referenzbilder abbilden. Günstig ist es dabei ebenso viele Ist-Bilder aufzunehmen wie Referenzbilder im Verfahrensschritt a) erstellt wurden.

Im Verfahrensschritt h) gemäß der vorliegenden Erfindung wird der Ähnlichkeitsindex zwischen mindestens einem der 1 bis n Ist-Bilder des dekorversehenen Trägermaterials und mindestens einem der 1 bis n Referenzbilder ermittelt. Die Ermittlung des Ähnlichkeitsindex zwischen dem mindestens einem der 1 bis n Ist-Bilder und mindestens einem der 1 bis n Referenzbilder wird durch einen Ähnlichkeitsvergleich durchgeführt. Der Ähnlichkeitsvergleich findet dabei immer zwischen einem Bildpaar statt. Ein Bildpaar wird dabei von einem Ist-Bild und einem Referenzbild gebildet, welche einen identischen Ausschnitt des Dekors abbilden. Besonders bevorzugt wird daher der Ähnlichkeitsindex jeweils zwischen einem Ist-Bild und einem Referenzbild ermittelt, die den gleichen Ausschnitt des Dekors abbilden.

In einer bevorzugten Ausführungsform der Erfindung wird der Ähnlichkeitsindex zwischen n Ist-Bildern und n Referenzbildern ermittelt, wobei n>1. Durch den Ähnlichkeitsvergleich von mehr als einem Bildpaar wird die Genauigkeit des erfindungsgemäßen Verfahrens erhöht.

Der Ähnlichkeitsvergleich wird durch eine Software auf einer Recheneinheit durchgeführt. Wird das ACMS^{®} Verfahren zur Erzeugung der hyperspektralen Bilder in den Verfahrensschritten a) und g) verwendet, kann der Ähnlichkeitsvergleich vorteilhafterweise über den Ähnlichkeitsindex der zugehörigen Software erfolgen. Diese Anwendung ist dem Fachmann bekannt. Der Ähnlichkeitsindex repräsentiert dabei die Farbabweichung zwischen dem Bildpaar. Je größer der Ähnlichkeitsindex ist, desto weniger weichen die Bilder des Bildpaares in ihren Farbwerten voneinander ab. Desto farbgetreuer ist demnach die Wiedergabe der analogen Dekorvorlage zu der digitalen Vorlage der analogen Dekorvorlage, wenn diese auf dem in Verfahrensschritt f) verwendeten Ausgabegerät ausgegeben wird.

Für den Ähnlichkeitsindex wird ein Sollwert vorgegeben, der nicht unterschritten werden soll. Der Sollwert wird in Abhängigkeit des Dekors und der darin enthaltenen Farben festgelegt. Ebenso kann der Anspruch eines Kunden an die farbgetreue Wiedergabe eines analogen Dekors durch die Wahl des Sollwertes berücksichtigt werden. Der Sollwert wird in % angegeben und liegt im Bereich von 75% bis 100%, bevorzugt im Bereich von 85% bis 100%, besonders bevorzugt im Bereich von 89% bis 100%. Je höher der Sollwert gewählt wird, desto weniger Farbabweichungen zwischen der analogen Dekorvorlage und dem dekorversehenen Trägermaterial werden toleriert. Das heißt, desto farbgetreuer ist die Wiedergabe des analogen Dekors im digitalen Druck mittels der vorliegenden Erfindung. Durch diese Vorgabe, kann festgelegt werden, wie farbgetreu die analoge Dekorvorlage durch die digitale Vorlage der analogen Dekorvorlage auf einem bestimmten Ausgabegerät ausgegeben werden soll. Das heißt, wie farbgetreu das Dekor des dekorversehenen Trägermaterials zu der analogen Dekorvorlage ist.

Ist der ermittelte Ähnlichkeitsindex unterhalb eines vorgegebenen Sollwertes, so wird das korrigierte dekorspezifische Profiltarget im Verfahrensschritt i) unter Berücksichtigung der im Ähnlichkeitsvergleich ermittelten Farbabweichung angepasst und das angepasste korrigierte dekorspezifische Profiltarget wird gespeichert.

Die Anpassung des korrigierten dekorspezifischen Profiltargets kann mit Hilfe einer fachüblichen Software auf einer Recheneinheit über den ermittelten Ähnlichkeitsindex erfolgen. Aus dem Ähnlichkeitsindex wird in diesem Fall ein Farbprofil errechnet, mit welchem die Farbwerte im korrigierten dekorspezifischen Profiltarget angepasst, das heißt geändert werden.

Anschließend wird die digitale Vorlage der analogen Dekorvorlage unter Berücksichtigung des angepassten korrigierten dekorspezifischen Referenztargets auf ein Trägermaterial durch ein Ausgabegerät ausgegeben. Erfindungsgemäß wird das gleiche Ausgabegerät verwendet, wie in den vorherigen Verfahrensschritten. Ebenfalls erfindungsgemäß wird die digitale Vorlage der analogen Dekorvorlage auch auf die gleiche Art von Trägermaterial gedruckt wie in den vorangegangenen Verfahrensschritten. Dies ist sinnvoll, um den Einfluss von Ausgabegerät und Trägermaterial auf die Farbwerte des Dekors des dekorversehenen Trägermaterials zu minimieren. Erfindungsgemäß werden anschließend die Verfahrensschritte g) bis i) wiederholt. Das heißt, von dem dekorversehenen Trägermaterial werden wiederum 1 bis n hyperspektrale Ist-Bilder unter den bereits ausgeführten Bedingungen aufgenommen. Anschließend wird erneut der Ähnlichkeitsindex zwischen mindestens einem der 1 bis n Ist-Bilder des dekorversehenen Trägermaterials und mindestens einem der 1 bis n Referenzbilder ermittelt.

Die Anpassung des korrigierten dekorspezifischen Profiltargets gemäß Verfahrensschritt i) wird erfindungsgemäß so lange durchgeführt, bis der Ähnlichkeitsindex zwischen mindestens einem der 1 bis n Ist-Bildern und mindestens einem der 1 bis n Referenzbilder oberhalb eines vorgegebenen Sollwertes liegt.

Erfindungsgemäß wird der Ähnlichkeitsindex zumindest zwischen einem Ist-Bild und einem Referenzbild ermittelt. Es ist aber auch möglich, den Ähnlichkeitsindex für n Ist-Bilder und n Referenzbilder zu ermitteln, mit n>1. Dabei werden entsprechend n Ähnlichkeitsindizes ermittelt. Erfindungsgemäß findet eine Anpassung des korrigierten dekorspezifischen Profiltargets statt, sobald einer von n ermittelten Ähnlichkeitsindizes unterhalb eines vorgegebenen Sollwertes liegt.

In einer bevorzugten Ausführungsform der Erfindung wird das korrigierte dekorspezifische Profiltarget oder das angepasste korrigierte Profiltarget, mit dem in dem Verfahrensschritt f) ein dekorversehenes Trägermaterial erzeugt wird, dessen im Verfahrensschritt h) ermittelter Ähnlichkeitsindex zwischen mindestens einem der 1 bis n Ist-Bilder des dekorversehenen Trägermaterials und mindestens einem der 1 bis n Referenzbilder oberhalb eines vorgegebenen Sollwertes liegt, als digitales Urmuster der analogen Dekorvorlage gespeichert.

Das heißt, wenn der Ähnlichkeitsindex eines dekorversehenen Trägermaterials und einer analogen Dekorvorlage oberhalb eines vorgegebenen Sollwertes liegt, wird das für die Erzeugung des dekorversehenen Trägermaterials verwendete korrigierte dekorspezifische Profiltarget oder das Verwendete angepasste korrigierte dekorspezifische Profiltarget als Urmuster gespeichert. Hierfür muss der im Verfahrensschritt h) ermittelte Ähnlichkeitsindex zwischen mindestens einem der 1 bis n Ist-Bilder des dekorversehenen Trägermaterials und mindestens einem der 1 bis n Referenzbilder oberhalb eines vorgegebenen Sollwertes liegen. In einer Ausführungsform der Erfindung müssen alle im Verfahrensschritt h) ermittelten Ähnlichkeitsindex zwischen den 1 bis n Ist-Bilder des dekorversehenen Trägermaterials und den 1 bis n Referenzbilder oberhalb eines vorgegebenen Sollwertes liegen.

Das digitale Urmuster kann damit vorteilhafterweise als Vorlage für den Dekordruck, insbesondere mit dem im Verfahren verwendeten Ausgabegerät dienen. Es stellt damit eine digitale Druckvorlage für eine analoge Dekorvorlage bereit, mit der ein farbgetreuer Dekordruck der analogen Dekorvorlage möglich wird.

Für Produktionszwecke, in denen das Urmuster zum Dekordruck, beispielsweise von Holzwerkstoffplatten, eingesetzt wird, erfolgt zunächst eine Grundierung der Holzwerkstoffplatten, wie oben beschrieben. Danach wird das Urmuster im Produktionsmaßstab auf Holzwerkstoffplatten aufgedruckt.

Es ist ebenfalls möglich, auf das Druckdekor bzw. die Druckdekore mindestens eine Schutzschicht, vorzugsweise zwei oder drei Schichten umfassend abriebfeste Partikel, natürliche Fasern, synthetische Fasern und/oder weitere Additive aufzutragen, wobei Harze wie Melamin-Formaldehyd-Harz, Harnstoff-Formaldehyd-Harz, Acrylatharze und Polyurethanharze als geeignete Bindemittel zum Einsatz kommen können.

Die abriebfesten Partikel sind bevorzugt ausgewählt aus der Gruppe enthaltend Aluminiumoxide, Korund, Borcabide, Siliciumdioxide, Siliciumcarbide und Glaskugeln. Als natürliche und/oder synthetische Fasern, insbesondere Fasern ausgewählt aus der Gruppe enthaltend Holzfasern, Zellulosefasern, Wollfasern, Hanffasern und organische oder anorganische Polymerfasern zum Einsatz.

Als Additive können leitfähige Substanzen, Flammschutzmittel, luminiszierende Stoffe und Metalle zugegeben werden. Dabei können die leitfähigen Substanzen ausgewählt sein aus der Gruppe enthaltend Ruß, Kohlefasern, Metallpulver und Nanopartikel, insbesondere Kohlenstoffnanoröhren. Es können auch Kombinationen dieser Substanzen zum Einsatz kommen. Als Flammschutzmittel werden bevorzugt Phosphate, Borate, insbesondere Ammoniumpolyphosphat, Tris(tri-bromneopentyl)phosphat, Zinkborat oder Borsäurekomplexe von mehrwertigen Alkoholen verwendet. Als luminiszierende Stoffe werden bevorzugt fluoreszierende und/oder phosphoreszierende Stoffe auf anorganischer oder organischer Basis, insbesondere Zinksulfit und Erdalkalialuminate verwendet.

In einer weiteren Ausführungsform des vorliegenden Verfahrens wird das bedruckte und gegebenenfalls mit einer Schutzschicht, insbesondere aus Formaldehydharzen, versehene Trägermaterial in einer Kurztakt (KT)-Presse weiter bearbeitet bzw. veredelt. In der KT-Presse werden die Harzschichten aufgeschmolzen und der Schichtverbund zu einem Laminat ausgehärtet. Während der Weiterverarbeitung in der KT-Presse können unter Verwendung eines strukturierten Pressbleches auch Oberflächenstrukturen in der Oberfläche des Trägermaterials wie einer Holzwerkstoffplatte erzeugt werden, die optional auf das Dekor abgestimmt ausgeführt sein können (so genannte dekorsynchrone Struktur). Bei Holzdekoren können die Strukturen in Form von Porenstrukturen vorliegen, die der Maserung folgen. Bei vielen Dekoren können die Strukturen Vertiefungen im Bereich von dem Dekor umfasster Fugen Füllungslinien sein.

Das vorliegende Verfahren wird in einer Vorrichtung zur Übernahme analoger Dekorvorlagen in den Dekordruck durchgeführt, wobei die Vorrichtung
- mindestens ein Mittel zum Erzeugen und Speichern von 1 bis n hyperspektralen digitalen Bildern;
- mindestens ein Mittel zum Erstellen und Speichern eines dekorspezifischen Referenztargets;
- mindestens ein Mittel zum Erstellen und Speichern eines dekorspezifischen Profiltargets;
- mindestens ein Mittel zum Berechnen und Speichern eines korrigierten dekorspezifischen Profiltargets:
- mindestens ein Mittel zum Ausgeben der digitalisierten Vorlage der analogen Dekorvorlage unter Berücksichtigung eines korrigierten dekorspezifischen Profiltargets oder eines angepassten korrigierten dekorspezifischen Profiltargets;
- mindestens ein Mittel zur Ermittlung eines Ähnlichkeitsindex zwischen mindestens einem der 1 bis n hyperspektralen digitalen Referenzbilder und mindestens einem der 1 bis n hyperspektralen digitalen Ist-Bilder; und
- mindestens ein Mittel zur Anpassung des korrigierten dekorspezifischen Profiltargets unter Berücksichtigung des ermittelten Ähnlichkeitsindex zwischen mindestens einem der 1 bis n hyperspektralen digitalen Referenzbilder und mindestens einem der 1 bis n hyperspektralen digitalen Ist-Bilder
umfasst.

Die zuvor beschriebenen Vorteile und vorteilhaften Ausführungsformen für das erfindungsgemäße Verfahren gelten gleichermaßen für die erfindungsgemäße Vorrichtung, so dass auf das zuvor Genannte Bezug genommen wird.

Wie erwähnt, handelt es sich bei dem mindestens einem Mittel zum Erzeugen und Speichern eines hyperspektralen digitalen Bildes um einen Hyperspektralscanner und/oder um eine Hyperspektralkamera. Bevorzugt werden die 1 bis n hyperspektralen digitalen Referenzbilder und die 1 bis n hyperspektralen digitalen Ist-Bilder mit dem gleichen Mittel zum Erzeugen eines hyperspektralen digitalen Bildes aufgenommen. In einer anderen Ausführungsform können die 1 bis n Referenzbilder mit einem ersten Mittel zum Erzeugen und Speichern eines hyperspektralen digitalen Bildes aufgenommen werden und die 1 bis n Ist-Bilder mit einem weiteren Mittel zum Erzeugen und Speichern eines hyperspektralen digitalen Bildes.

Das mindestens eine Mittel zum Erstellen und Speichern eines dekorspezifischen Referenztargets, das mindestens eine Mittel zum Erstellen und Speichern eines dekorspezifischen Profiltargets sowie das mindestens eine Mittel zum Berechnen und Speichern eines korrigierten dekorspezifischen Profiltargets sind jeweils Recheneinheiten, die eine entsprechende, dem Fachmann bekannte Software aufweisen. Bevorzugt ist das mindestens eine Mittel zum Erstellen und Speichern eines dekorspezifischen Referenztargets, das mindestens eine Mittel zum Erstellen und Speichern eines dekorspezifischen Profiltargets sowie das mindestens eine Mittel zum Erstellen und Speichern eines dekorspezifischen Profiltargets ein und dieselbe Recheneinheit. Diese Ausführungsform ist besonders wirtschaftlich und ressourcensparend. Eine Recheneinheit ist beispielsweise ein Prozessrechner oder ein Steuercomputer.

Das mindestens eine Mittel zum Ausgeben der digitalisierten Vorlage der analogen Dekorvorlage unter Berücksichtigung eines korrigierten dekorspezifischen Profiltargets oder eines angepassten dekorspezifischen Profiltargets ist erfindungsgemäß eine Vorrichtung für den direkten oder indirekten Digitaldruck vorzugsweise, eine Vorrichtung für den digitalen Direktdruck.

Weiterhin umfasst die Vorrichtung mindestens ein Mittel zur Ermittlung des Ähnlichkeitsindex zwischen mindestens einem der 1 bis n Referenzbilder und mindestens einem der 1 bis n Ist-Bilder und mindestens ein Mittel zur Anpassung des korrigierten dekorspezifischen Profiltargets unter Berücksichtigung des ermittelten Ähnlichkeitsindex und damit der ermittelten Farbabweichungen zwischen mindestens einem der 1 bis n hyperspektralen digitalen Referenzbilder und mindestens einem der 1 bis n hyperspektralen digitalen Ist-Bilder. Diese Mittel sind jeweils Recheneinheiten, die eine dem Fachmann bekannte Software aufweisen. In einer bevorzugten Ausführungsform sind das mindestens eine Mittel zur Ermittlung des Ähnlichkeitsindex zwischen mindestens einem der 1 bis n Referenzbilder und mindestens einem der 1 bis n Ist-Bilder und das mindestens eine Mittel zur Anpassung des korrigierten dekorspezifischen Profiltargets unter Berücksichtigung der ermittelten Farbabweichungen zwischen mindestens einem der 1 bis n Referenzbilder und mindestens einem der 1 bis n Ist-Bilder ein und dieselbe Recheneinheit.

In einer Ausführungsform umfasst die erfindungsgemäße Vorrichtung weiterhin mindestens ein Mittel zur Erzeugung einer digitalen Vorlage der analogen Dekorvorlage. Dieses eine Mittel zur Erzeugung und Speicherung einer digitalen Vorlage der analogen Dekorvorlage ist ein Scanner mit einer Recheneinheit oder ein Fotoapparat, insbesondere ein digitaler Fotoapparat oder eine Digitalkamera.

Eine Produktionslinie für das Bedrucken von Holzwerkstoffplatten mit einem Urmuster umfasst Mittel zum Erzeugen einer Grundierung, ein Mittel zum Drucken des Urmusters, vorzugsweise einen Digitaldrucker, und in einer weitergehenden Variante mindestens ein Mittel zum Aufbringen einer Schutzschicht auf das mit dem jeweiligen Druck dekorversehene Trägermaterial. Dieses Mittel bzw. diese Vorrichtung zum Aufbringen einer Schutzschicht ist vorzugsweise im Anschluss an die Druckstraße angeordnet.

In einer bevorzugten Ausführungsform weist die Produktionslinie mindestens eine Kurztaktpresse zum Verpressen des mit dem Druckdekor versehenen Trägermaterials und der darauf angeordneten Schutzschicht auf.

Durch das erfindungsgemäße Verfahren und die erfindungsgemäß Vorrichtung ist es möglich analoge Dekorvorlagen farbgetreu in den Dekordruck zu übernehmen. Der Anspruch des Kunden an die farbgetreue Wiedergabe kann vorteilhafterweise durch die Vorgabe des Sollwertes für den Ähnlichkeitsindex berücksichtigt werden. Dies erhöht die Wirtschaftlichkeit der vorliegenden Erfindung, da die Druckqualität beim Dekordruck an bestehende Kundenwünsche angepasst werden kann. Darüber hinaus wird die Wirtschaftlichkeit der vorliegenden Erfindung weiterhin dadurch gesteigert, dass eine Vielzahl von Verfahrensschritten auf den gleichen Mitteln der Vorrichtung ablaufen können. So ist es möglich in einer Ausführungsform der Erfindung das gesamte Verfahren mittels einer Recheneinheit, einem Mittel zur Erzeugung eines hyperspektralen Bildes und einer Ausgabevorrichtung durchzuführen.

Die vorliegende Erfindung ermöglicht durch das Bereitstellen eines Urmusters für eine analoge Dekorvorlage ebenfalls die einfache Anpassung an weitere Druckaufgaben. Beispielsweise wird die Anpassung an weitere Ausgabegeräte, wie andere Druckvorrichtungen oder andere Trägermaterialien erleichtert. Wird die digitale Vorrichtung der analogen Dekorvorlage auf einer anderen Druckvorrichtung und/oder auf ein anderes Trägermaterial ausgegeben als für die Erstellung des Urmusters verwendet wurde, so kann das Urmuster als Referenz für das Anpassen des Druckvorgangs dienen. Es ist damit vorteilhafterweise auf einfache Weise möglich, die analoge Dekorvorlage farbgetreu auch auf verschiedenen Druckern und/oder auf verschiedene Trägermaterialien auszugeben.

In einer Ausführungsform der Erfindung wird daher aus dem Urmuster ein Urmusterprofiltarget erstellt, welches zunächst digital vorliegt. Das Urmusterprofiltarget enthält neben dem Urmuster zusätzliche Farbfelder, die Standardfarben eines zuvor definierten Farbraumes aufweisen. Die Standardfarben werden bevorzugt von einer Software vorgegeben. Geeignet hierfür ist beispielsweise die Software Colorgate Fingerprint Tool der Firma Colorgate. Das Urmusterprofiltarget kann dann auf jedem geeigneten Ausgabegerät auf ein erfindungsgemäßes Trägermaterial ausgegeben werden. Es entsteht ein Trägermaterial, das mit dem Urmusterprofiltarget dekoriert ist. Die Farbfelder des auf das Trägermaterial ausgegebenen Urmusterprofiltargets werden anschließend farbtechnisch vermessen. Dafür werden in einer bevorzugten Ausführungsform der Erfindung 1 bis n digitale hyperspektrale Bilder von dem mit dem Urmusterprofiltarget dekorierten Trägermaterial aufgenommen. Bevorzugt werden so viele hyperspektrale Bilder aufgenommen, dass das gesamte ausgegebene Urmusterprofiltarget abgebildet wird. Mit Hilfe einer geeigneten Software werden aus den 1 bis n digitalen hyperspektralen Bildern die Farbwerte der Farbfelder des ausgegebenen Urmusterprofiltargets bestimmt. Erfindungsgemäß werden anschließend die Farbabweichungen zwischen den Farbwerten der Farbfelder des digital vorliegenden Urmusterprofiltargets und den Farbwerten der Farbfelder des auf das Trägermaterial ausgegebenen Urmusterprofiltargets ermittelt.

In einer bevorzugten Ausführungsform werden hierfür die Farbwerte der Farbfelder des Urmusterprofiltargets mit den Farbwerten der Farbfelder des ausgegeben Urmusterprofiltargets mit Hilfe der Software verglichen und bei Abweichungen zwischen den Farbwerten wird ein korrigiertes Urmusterprofiltarget unter Berücksichtigung der Ermittelten Farbabweichungen erzeugt und gespeichert. Eine hierfür geeignete Software ist dem Fachmann bekannt.

In einer weiteren Ausführungsform werden die Farbwerte der Farbfelder des digital vorliegenden Urmusterprofiltargets mit den Farbwerten der Farbfelder des auf das Trägermaterial ausgegeben Urmusterprofiltargets über einen Ähnlichkeitsindex verglichen. Wenn der Ähnlichkeitsindex unterhalb eines vorgegebenen Sollwertes liegt, wird ein korrigiertes Urmusterprofiltarget unter Berücksichtigung der ermittelten Farbabweichungen errechnet und gespeichert.

In einer Ausführungsform des erfindungsgemäßen Verfahrens wird daher aus dem Urmuster ein digitales Urmusterprofiltarget und ein korrigiertes Urmusterprofiltarget erzeugen werden, umfassend die Schritte:
- Erstellen eines digitalen Urmusterprofiltargets;
- Ausgabe des digitalen Urmusterprofiltargets mit einem Ausgabegerät auf ein Trägermaterial;
- Erzeugen von 1 bis n hyperspektralen digitalen Bildern des mit dem Urmusterprofiltaget versehenen Trägermaterials;
- Bestimmen der Farbwerte des auf das Trägermaterial ausgegebenen Urmusterprofiltargets aus den 1 bis n digitalen hyperspektralen Bildern;
- Ermitteln der Farbabweichungen zwischen den Farbwerten der Farbfelder des digital vorliegenden Urmusterprofiltargets und den Farbwerten der Farbfelder des auf das Trägermaterial ausgegebenen Urmusterprofiltargets;
- Erzeugen und Speichern eines korrigierten Urmusterprofiltargets unter Berücksichtigung der ermittelten Farbabweichungen.

In einer Ausführungsform der Erfindung wird das korrigierte Urmusterprofiltarget erneut auf dem bereits verwendeten Ausgabegerät auf einem Trägermaterial ausgegeben. Vorteilhafterweise auf der gleichen Art von Trägermaterial wie bei der vorherigen Ausgabe. Es werden erneut 1 bis n hyperspektrale digitale Bilder vom auf das Trägermaterial ausgegeben korrigierten Urmusterprofiltarget erzeugt und deren Ähnlichkeit zum Urmusterprofiltarget wird erneut ermittelt. Dieses Vorgehen ermöglicht eine Kontrolle der farbtreue des auf ein Trägermaterial ausgegebenen Urmusterprofiltargets zu dem digital vorliegenden Urmusterprofiltarget. Falls erforderlich kann eine erneute Korrektur vorgenommen werden.

Das Bestimmen der Farbwerte des auf das Trägermaterial ausgegebenen Urmusterprofiltargets aus den 1 bis n digitalen hyperspektralen Bildern und der Vergleich der Farbwerte der Farbfelder des digital vorliegenden Urmusterprofiltargets mit den Farbwerten der Farbfelder des auf das Trägermaterial ausgegebenen Urmusterprofiltargets wird bevorzugt automatisch mit Hilfe einer geeigneten Software auf einer Recheneinheit durchgeführt. Geeignete Software hierfür ist dem Fachmann bekannt. In einer Ausführungsform der Erfindung können darüber hinaus auch manuelle Änderungen an den Farbwerten der Farbfelder mit Hilfe einer geeigneten Software vorgenommen werden.

Mit dieser Ausführungsform des Verfahrens ist es vorteilhafterweise möglich, das Urmuster durch Erstellen eines Urmusterprofiltargets und eines korrigierten Urmusterprofiltargets an verschiedene Ausgabegeräte und/oder verschiedene Trägermaterialien einfach und schnell anzupassen. Für jedes weitere verwendete Ausgabegerät und/oder jedes weitere verwendete Trägermaterial wird somit ein Urmusterprofiltarget und ein korrigiertes Urmusterprofiltarget erzeugt, welches dann jeweils den farbgetreuen Dekordruck der digitalen Vorlage der analogen Dekorvorlage ermöglicht. Geeignete Ausgabegeräte und geeignete Trägermaterialien sind alle im Rahmen der vorliegenden Erfindung bereits beschrieben Ausgabegeräte und Trägermaterialien.

Damit wird vorteilhafterweise der farbgetreue Dekordruck, insbesondere digitale Dekordruck, einer digitalen Vorlage einer analogen Dekorvorlage auf verschiedenen Trägermaterialien und/oder mit Hilfe verschiedener Ausgabegeräte ermöglicht.

Die Erfindung wird nachfolgend anhand einer Figur und sechs Ausführungsbeispielen näher erläutert. Es zeigt:

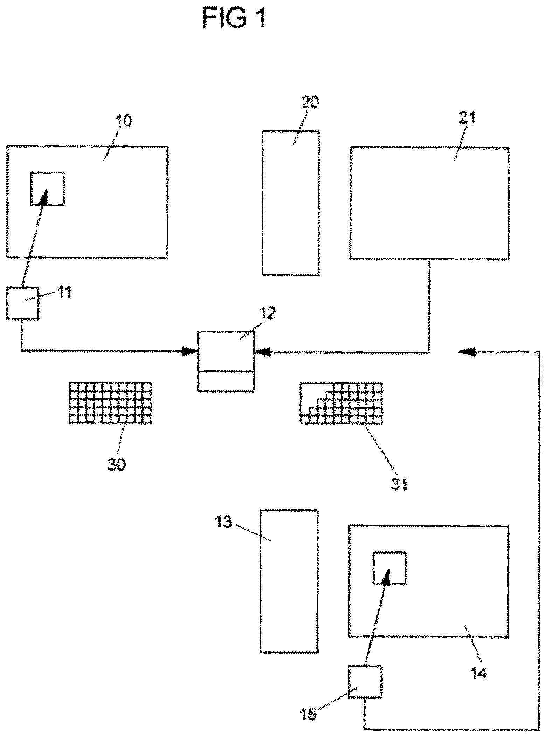

- Figur 1:: eine Ausführungsform des erfindungsgemäßen Verfahrens.

**Figur** 1 zeigt eine analoge Dekorvorlage 10, von der mittels einer Vorrichtung zum Aufnehmen von hyperspektralen Bildern 11 1 bis n hyperspektrale digitale Referenzbilder aufgenommen werden. Eines dieser Bilder bildet einen Ausschnitt aus der analogen Dekorvorlage 10 ab. Dieser Ausschnitt ist in Figur 1 mit einem Kästchen in der analogen Dekorvorlage 10 gekennzeichnet. Die 1 bis n Referenzbilder werden in der Recheneinheit 12 gespeichert und in der Recheneinheit wir ein dekorspezifisches Referenztarget 30 erstellt. Mit dem Mittel zur Erzeugung einer digitalen Vorlage der analogen Dekorvorlage 20 wird eine digitale Vorlage der analogen Dekorvorlage 21 erstellt. Das Mittel zur Erzeugung einer digitalen Vorlage der analogen Dekorvorlage 20 kann beispielsweise ein Scanner oder eine Digitalkamera sein.

Die digitale Vorlage der analogen Dekorvorlage 21 wird in der Recheneinheit 12 gespeichert und in der Recheneinheit 12 wird ein dekorspezifisches Profiltarget 31 der digitalen Vorlage der analogen Dekorvorlage 21 erstellt. Erfindungsgemäß wird in der Recheneinheit 12 ein korrigiertes dekorspezifisches Profiltarget aus dem dekorspezifischen Referenztarget 30 und dem dekorspezifischen Profiltarget 31 errechnet. Mit dem Ausgabegerät 13 wird die digitale Vorlage der analogen Dekorvorlage 21 unter Verwendung des korrigierten dekorspezifischen Profiltargets auf ein Trägermaterial ausgegeben, so dass ein dekorversehenes Trägermaterial 14 entsteht. Das Ausgabegerät 13 kann eine Vorrichtung für den Tiefdruck sein oder besonders bevorzugt eine Vorrichtung für den digitalen Direktdruck.

Von dem dekorversehen Trägermaterial 14 werden erfindungsgemäß 1 bis n hyperspektrale digitale Ist-Bilder mit einer Vorrichtung zum Aufnehmen von hyperspektralen Bildern 15 aufgenommen. Dabei bilden die Ist-Bilder die gleichen Ausschnitte aus dem Dekor ab wie die Referenzbilder. Dies ist in Figur 1 durch ein Kästchen auf dem dekorversehenen Trägermaterial 14 gekennzeichnet. In der Recheneinheit 12 wird der Ähnlichkeitsindex zwischen den Ist-Bildern und den Referenzbildern gemäß des erfindungsgemäßen Verfahrens berechnet, und, falls der Ähnlichkeitsindex unterhalb eines vorgegebenen Sollwertes liegt, wird das dekorspezifische Profiltarget 31 angepasst. Erfindungsgemäß wird daraufhin in der Recheneinheit 12 das korrigierte dekorspezifische Profiltarget unter Berücksichtigung des ermittelten Ähnlichkeitsindex und der daraus resultierenden Farbabweichungen angepasst.

Anschließend wird die digitale Vorlage der analogen Dekorvorlage 21 unter Verwendung des angepassten korrigierten dekorspezifischen Profiltargets auf dem Ausgabegerät 13 auf ein Trägermaterial ausgegeben, wodurch wiederum ein dekorversehenes Trägermaterial 14 erzeugt wird. Von dem dekorversehenen Trägermaterial 14 werden 1 bis n hyperspektrale digitale Ist-Bilder mit einer Vorrichtung zum Aufnehmen von hyperspektralen Bildern 15 aufgenommen. In der Recheneinheit 12 wird der Ähnlichkeitsindex zwischen den Ist-Bildern und den Referenzbildern gemäß des erfindungsgemäßen Verfahrens berechnet und falls der Ähnlichkeitsindex wiederum unterhalb eines vorgegebenen Sollwertes liegt, wird das korrigierte dekorspezifische Profiltarget erneut angepasst. Eine Anpassung des korrigierten dekorspezifischen Profiltargets gemäß Verfahrensschritt h) wird so lange durchgeführt, bis der Ähnlichkeitsindex zwischen mindestens einem der 1 bis n Ist-Bildern und mindestens einem der 1 bis n Referenzbilder oberhalb eines vorgegebenen Sollwertes liegt.

### Ausführungsbeispiel 1

Von einer analogen Dekorvorlage, die eine Holzmaserung zeigt, wurden 5 hyperspektrale digitale Referenzbilder aufgenommen. Aus den Referenzbildern wurde mit einer Software auf einer Recheneinheit ein dekorspezifisches Referenztarget erstellt. Die analoge Dekorvorlage wurde mittels eines Scanners gescannt und es wurde eine digitale Vorlage der analogen Dekorvorlage erzeugt. Diese wurde ebenfalls in der Recheneinheit gespeichert. Aus 5 Ausschnitten der digitalen Vorlage der analogen Dekorvorlage, die zu den Ausschnitten der 5 Referenzbilder des analogen Dekors identisch Bereiche des Dekors abbilden, wurde mit einer Software auf einer Recheneinheit ein dekorspezifisches Profiltarget erstellt. Aus dem dekorspezifischen Referenztarget und dem dekorspezifischen Profiltarget wurde in der Recheneinheit automatisch ein korrigiertes dekorspezifisches Profiltarget erstellt. Auf einem Digitaldrucker wurde die digitale Vorlage der analogen Dekorvorlage unter Berücksichtigung des korrigierten dekorspezifischen Profiltargets auf eine vorgrundierte Holzwerkstoffplatte gedruckt. Die Holzwerkstoffplatte wurde dazu zuvor geschliffen, mit einer wässrigen Harzlösung vergütet und - anschließend mit einem Weißgrund ausgestattet. Von dem auf die Holzwerkstoffplatte gedruckten Dekor wurden 5 hyperspektrale digitale Ist-Bilder aufgenommen. Die Ist-Bilder wurden von Ausschnitten der gedruckten Dekors aufgenommen, die identisch zu den Ausschnitten der Referenzbilder sind. Der Ähnlichkeitsvergleich ergab folgende Ähnlichkeitsindizes:

| Bild Paar | Ähnlichkeitsindex |
|---|---|
| 1 | 94% |
| 2 | 93% |
| 3 | 95% |
| 4 | 90% |
| 5 | 92% |

Zu Beginn des Verfahrens wurde ein Sollwert für den Ähnlichkeitsindex von 89% festgelegt, der nicht unterschritten werden soll. Alle Ähnlichkeitsindizes liegen damit oberhalb des Sollwertes. Das korrigierte dekorspezifische Profiltarget wurde daraufhin als Urmuster gespeichert.

### Ausführungsbeispiel 2

Von einer analogen Dekorvorlage, die eine Holzmaserung zeigt, wurden 5 hyperspektrale digitale Referenzbilder aufgenommen. Aus den Referenzbildern wurde mit einer Software auf einer Recheneinheit ein dekorspezifisches Referenztarget erstellt. Die analoge Dekorvorlage wurde mittels eines Scanners gescannt und es wurde eine digitale Vorlage der analogen Dekorvorlage erzeugt. Diese wurde ebenfalls in der Recheneinheit gespeichert. Aus 5 Ausschnitten der digitalen Vorlage der analogen Dekorvorlage, die zu den Ausschnitten der 5 Referenzbilder des analogen Dekors identisch Bereiche des Dekors abbilden, wurde mit einer Software auf einer Recheneinheit ein dekorspezifisches Profiltarget erstellt. Aus dem dekorspezifischen Referenztarget und dem dekorspezifischen Profiltarget wurde in der Recheneinheit automatisch ein korrigiertes dekorspezifisches Profiltarget erstellt. Auf einem Digitaldrucker wurde die digitale Vorlage der analogen Dekorvorlage unter Berücksichtigung des korrigierten dekorspezifischen Profiltargets auf eine vorgrundierte Holzwerkstoffplatte gedruckt. Die Holzwerkstoffplatte wurde dazu zuvor geschliffen, mit einer wässrigen Harzlösung vergütet und mit einem Weißgrund ausgestattet. Von dem auf die Holzwerkstoffplatte gedruckten Dekor wurden 5 hyperspektrale digitale Ist-Bilder aufgenommen. Die Ist-Bilder wurden von Ausschnitten der gedruckten Dekors aufgenommen, die identisch zu den Ausschnitten der Referenzbilder sind. Der Ähnlichkeitsvergleich ergab folgende Ähnlichkeitsindizes:

| Bild Paar | Ähnlichkeitsindex |
|---|---|
| 1 | 93% |
| 2 | 85% |
| 3 | 84% |
| 4 | 91% |
| 5 | 88% |

Zu Beginn des Verfahrens wurde ein Sollwert für den Ähnlichkeitsindex von 89% festgelegt, der nicht unterschritten werden soll. Die Ähnlichkeitsindizes für die Bildpaare 2, 3 und 5 lagen damit unterhalb des Sollwertes.

Durch eine Software der Firma Colorgate wurde ein Farbprofil errechnet und auf dessen Grundlage wurde in der Software das korrigierte dekorspezifische Profiltarget angepasst. Unter Berücksichtigung des angepassten korrigierten dekorspezifischen Profiltargets wurde mit demselben Digitaldrucker auf eine Holzwerkstoffplatte gedruckt, die, wie die Holzwerkstoffplatte zuvor, mit einer wässrigen Harzlösung grundiert und angeschliffen wurde. Von dem auf die Holzwerkstoffplatte gedruckten Dekor wurden erneut 5 hyperspektrale digitale Ist-Bilder aufgenommen. Die Ist-Bilder wurden wiederum von Ausschnitten des gedruckten Dekors aufgenommen, die identisch zu den Ausschnitten der Referenzbilder sind. Der Ähnlichkeitsvergleich ergab folgende Ähnlichkeitsindizes:

| Bild Paar | Ähnlichkeitsindex |
|---|---|
| 1 | 96% |
| 2 | 93% |
| 3 | 91% |
| 4 | 94% |
| 5 | 96% |

Alle Ähnlichkeitsindizes lagen nun oberhalb des Sollwertes. Das angepasste korrigierte dekorspezifische Profiltarget wurde daraufhin als Urmuster gespeichert.

### Ausführungsbeispiel 3

Von einer analogen Dekorvorlage, die eine Holzmaserung zeigt, wurden 5 hyperspektrale digitale Referenzbilder aufgenommen. Aus den Referenzbildern wurde mit einer Software auf einer Recheneinheit ein dekorspezifisches Referenztarget erstellt. Die analoge Dekorvorlage wurde mittels eines Scanners gescannt und es wurde eine digitale Vorlage der analogen Dekorvorlage erzeugt. Diese wurde ebenfalls in der Recheneinheit gespeichert. Aus 5 Ausschnitten der digitalen Vorlage der analogen Dekorvorlage, die zu den Ausschnitten der 5 Referenzbilder des analogen Dekors identisch Bereiche des Dekors abbilden, wurde mit einer Software auf einer Recheneinheit ein dekorspezifisches Profiltarget erstellt. Aus dem dekorspezifischen Referenztarget und dem dekorspezifischen Profiltarget wurde in der Recheneinheit automatisch ein korrigiertes dekorspezifisches Profiltarget erstellt. Auf einem Digitaldrucker wurde die digitale Vorlage der analogen Dekorvorlage unter Berücksichtigung des korrigierten dekorspezifischen Profiltargets auf eine vorgrundierte Papierlage gedruckt. Auf die Papierlage wurde zum Vorgrundieren ein Primer aufgebracht. Die verwendete Papierlage hatte ein Gewicht von 70 g/m². Von dem auf die Papierlage gedruckten Dekor wurden 5 hyperspektrale digitale Ist-Bilder aufgenommen. Die Ist-Bilder wurden von Ausschnitten der gedruckten Dekors aufgenommen, die identisch zu den Ausschnitten der Referenzbilder sind. Der Ähnlichkeitsvergleich ergab folgende Ähnlichkeitsindizes:

| Bild Paar | Ähnlichkeitsindex |
|---|---|
| 1 | 94% |
| 2 | 93% |
| 3 | 95% |
| 4 | 90% |
| 5 | 92% |

Zu Beginn des Verfahrens wurde ein Sollwert für den Ähnlichkeitsindex von 89% festgelegt, der nicht unterschritten werden soll. Alle Ähnlichkeitsindizes liegen damit oberhalb des Sollwertes. Das korrigierte dekorspezifische Profiltarget wurde daraufhin als Urmuster gespeichert.

### Ausführungsbeispiel 4

Von einer analogen Dekorvorlage, die eine Holzmaserung zeigt, wurden 5 hyperspektrale digitale Referenzbilder aufgenommen. Aus den Referenzbildern wurde mit einer Software auf einer Recheneinheit ein dekorspezifisches Referenztarget erstellt. Die analoge Dekorvorlage wurde mittels eines Scanners gescannt und es wurde eine digitale Vorlage der analogen Dekorvorlage erzeugt. Diese wurde ebenfalls in der Recheneinheit gespeichert. Aus 5 Ausschnitten der digitalen Vorlage der analogen Dekorvorlage, die zu den Ausschnitten der 5 Referenzbilder des analogen Dekors identisch Bereiche des Dekors abbilden, wurde mit einer Software auf einer Recheneinheit ein dekorspezifisches Profiltarget erstellt. Aus dem dekorspezifischen Referenztarget und dem dekorspezifischen Profiltarget wurde in der Recheneinheit automatisch ein korrigiertes dekorspezifisches Profiltarget erstellt. Auf einem Digitaldrucker wurde die digitale Vorlage der analogen Dekorvorlage unter Berücksichtigung des korrigierten dekorspezifischen Profiltargets auf eine vorgrundierte Papierlage gedruckt. Auf die Papierlage wurde zum Vorgrundieren ein Primer aufgebracht. Die verwendete Papierlage hatte ein Gewicht von 70 g/m². Von dem auf die Papierlage gedruckten Dekor wurden 5 hyperspektrale digitale Ist-Bilder aufgenommen. Die Ist-Bilder wurden von Ausschnitten der gedruckten Dekors aufgenommen, die identisch zu den Ausschnitten der Referenzbilder sind. Der Ähnlichkeitsvergleich ergab folgende Ähnlichkeitsindizes:

| Bild Paar | Ähnlichkeitsindex |
|---|---|
| 1 | 85% |
| 2 | 93% |
| 3 | 91% |
| 4 | 84% |
| 5 | 88% |

Zu Beginn des Verfahrens wurde ein Sollwert für den Ähnlichkeitsindex von 89% festgelegt, der nicht unterschritten werden soll. Die Ähnlichkeitsindizes für die Bildpaare 1, 4 und 5 lagen damit unterhalb des Sollwertes.

Durch eine Software der Firma Colorgate wurde ein Farbprofil errechnet und auf dessen Grundlage wurde in der Software das korrigierte dekorspezifische Profiltarget angepasst. Unter Berücksichtigung des angepassten korrigierten dekorspezifischen Profiltargets wurde mit demselben Digitaldrucker auf eine Papierlage gedruckt, die, wie die Papierlage zuvor, mit einem Primer versehen wurde. Von dem auf die Papierlage gedruckten Dekor wurden erneut 5 hyperspektrale digitale Ist-Bilder aufgenommen. Die Ist-Bilder wurden wiederum von Ausschnitten des gedruckten Dekors aufgenommen, die identisch zu den Ausschnitten der Referenzbilder sind. Der Ähnlichkeitsvergleich ergab folgende Ähnlichkeitsindizes:

| Bild Paar | Ähnlichkeitsindex |
|---|---|
| 1 | 96% |
| 2 | 93% |
| 3 | 91% |
| 4 | 94% |
| 5 | 96% |

Alle Ähnlichkeitsindizes lagen nun oberhalb des Sollwertes. Das angepasste korrigierte dekorspezifische Profiltarget wurde daraufhin als Urmuster gespeichert.

### Ausführungsbeispiel 5 - Finishing HDF-Platt

HDF-Platten werden nach Aufbringen einer Grundierung mit einem Urmuster gemäß der Ausführungsbeispiele 1 und 2 im Digitaldruck bedruckt und wie folgt weiterverarbeitet:
Die bedruckten HDF-Platten wurden vor der Produktionslinie vereinzelt und mit einer Geschwindigkeit von 28 m/min durch die nachfolgende Produktionsanlage transportiert.

In einem ersten Walzenauftragsaggregat werden ca. 70 g Melaminharz fl. (Feststoffgehalt: 55 Gew%) die üblichen Hilfsstoffe enthaltend ( Härter, Netzmittel usw. ) auf die Plattenoberfläche aufgetragen. Auf die Plattenunterseite wird ebenfalls mit dem ersten Walzenauftragsaggregat ein Melaminharz aufgetragen (Auftragsmenge: 60 g Harz fl. /m², Feststoffgehalt: ca. 55 Gew%).

Danach werden auf die Oberfläche mit einer Streuapparatur 14 g Korund /m² ( F 200 ) aufgestreut. Danach wird eine Melamin-Harzschicht (Feststoffgehalt: 55 Gew%) in einer Menge von 25 g/m² aufgetragen. Auch diese enthält die üblichen Hilfsstoffe. Auf die Plattenunterseite wird ebenfalls mit einem Walzenauftragsaggregat ein Melaminharz aufgetragen (Auftragsmenge: 50 g Harz fl. /m², Feststoffgehalt: ca. 55 Gew%). Die Platte wird in einem Umlufttrockner getrocknet.

Danach wird auf die Plattenoberfläche ein Melaminharz aufgetragen, das zusätzlich noch Glaskugeln enthält. Diese haben einen Durchmesser von 60 - 80 µm. Die Auftragsmenge des Harzes liegt bei ca. 20 g Melaminharz fl. / m² (Feststoffgehalt: 61,5 Gew%). In der Rezeptur ist neben dem Härter und dem Netzmittel auch ein Trennmittel enthalten. Die Auftragsmenge an Glaskugeln liegt bei ca. 3 g/m². Auf die Plattenunterseite wird ebenfalls mit einem Walzenauftragsaggregat ein Melaminharz aufgetragen (Auftragsmenge: 40 g Harz fl. /m², Feststoffgehalt: ca. 55 Gew%). Die Platte wird wiederum in einem Umlufttrockner getrocknet und danach nochmals mit einem Melaminharz beschichtet, das Glaskugeln enthält. Als weitere Komponente ist Zellulose (Vivapur 302) enthalten. Es werden wiederum ca. 20 g Melaminharz fl. / m² (Feststoffgehalt: 61,6 Gew%) aufgetragen. Dabei werden wieder ca. 3 g Glaskugeln und 0,25 g Zellulose / m² aufgetragen. In den Rezepturen ist neben dem Härter und dem Netzmittel auch ein Trennmittel enthalten. Auf die Plattenunterseite wird ebenfalls mit einem Walzenauftragsaggregat ein Melaminharz aufgetragen (Auftragsmenge: 30 g Harz fl. /m², Feststoffgehalt: ca. 55 Gew%). Das Harz wird wiederum in einem Umlufttrockner getrocknet und danach wird die Platte in einer Kurztaktpresse bei 200°C und einem Druck von 400 N/cm² verpresst. Die Presszeit betrug 10 Sekunden. Als Strukturgeber wurde ein Pressblech mit einer Holzstruktur verwendet.

Die Menge an Harz variiert je Walzenauftrag im Bereich von 5 g/m2 bis etwa 100 g/m2; dabei kann auch der Feststoffgehalt des Harzes im Bereich von 50 Gew% bis etwa 80 Gew% variieren. Die Korundmenge variiert zwischen 2 g/m2 bis 30 g/m2. Die Zuschlagstoffe Glas und Korund variieren gleichfalls in ihren jeweiligen Mengen.

### Ausführungsbeispiel 6 - Papier

Auf ein Druckbasispapier mit einem Geweicht von 70 g/m² wurde ein Primer aufgebracht und anschließend wurde das Druckbasispapier mit einem Urmuster gemäß der Ausführungsbeispiele 1 und 2 im Digitaldruck bedruckt und wie folgt weiterverarbeitet:
Die dekorierten Papierlagen wurden mit wässrigem Melaminharz imprägniert. Nach dem Trocknen wurden die Papierlagen geschnitten und zum Verpressen als Laminat aufgestapelt. Für die Herstellung eines Laminates wurden, wie im Folgenden beschrieben, verschiedene Lagen aufgestapelt. Auf die Unterseite einer Trägerplatte, die in diesem Ausführungsbeispiel eine Spanplatte war, wurde zunächst eine harzimprägnierte Papierlage als Gegenzug aufgebracht. Auf die Oberseite der Trägerplatte wurde die imprägnierte dekorierte Papierlage aufgebracht und darauf ein sogenanntes Overlay. Als Overlay wurde eine harzimprägnierte und mit Hartstoffpartikeln ausgestattete transparente Papierlage genutzt. Der Stapel wurde in eine Kurztaktpresse gefahren und unter der Wirkung von Wärme und Druck zu Laminat verpresst. Oberseitig wurde dazu in der Kurztaktpresse ein strukturiertes Pressblech verwendet, so dass auf der Oberfläche des Laminats eine Struktur erzeugt wurde. Die erzeugte Struktur ist zumindest teilweise synchron zu dem Dekor der Papierlage.

### Bezugszeichenliste

- 10: analoge Dekorvorlage
- 11, 15: Vorrichtung zum Aufnehmen von hyperspektralen Bildern
- 12: Recheneinheit
- 13: Ausgabegerät
- 14: dekorversehenes Trägermaterial
- 20: Mittel zur Erzeugung einer digitalen Vorlage der analogen Dekorvorlage
- 21: digitale Vorlage der analogen Dekorvorlage
- 30: dekorspezifisches Referenztarget
- 31: dekorspezifisches Profiltarget

## Patentansprüche

1. Verfahren zur Übernahme analoger Dekorvorlagen (10) in den Dekordruck, umfassend einen Ähnlichkeitsvergleich zwischen mindestens einem von 1 bis n hyperspektralen digitalen Referenzbildern einer analogen Dekorvorlage und mindestens einem von 1 bis n hyperspektralen digitalen Ist-Bildern eines dekorversehenen Trägermaterials (14), wobei n zwischen 1 und 100 liegt,
**dadurch gekennzeichnet, dass** das Verfahren die Schritte umfasst:
a) Aufnehmen und Speichern von 1 bis n hyperspektralen digitalen Referenzbildern der gesamten analogen Dekorvorlage oder von 1 bis n Ausschnitten der analogen Dekorvorlage mit einer Hyperspektralkamera oder einem Hyperspektralscanner, wobei jedes hyperspektrale digitale Referenzbild einen hyperspektralen Datenwürfel mit zwei räumlichen und einer spektralen Dimension aufweist;
b) Erstellen eines dekorspezifischen Referenztargets (30) aus den 1 bis n hyperspektralen digitalen Referenzbildern, wobei das Erstellen eines dekorspezifischen Referenztargets (30) aus den 1 bis n hyperspektralen digitalen Referenzbildern das Zusammensetzten der einzelnen hyperspektralen digitalen Referenzbildern mittels einer Grafiksoftware zusammengesetzt umfasst, wenn n>1, und wobei das dekorspezifische Referenztarget (30) die dekorspezifischen Farbwerte der analogen Druckvorlage beinhaltet, wobei die am häufigsten in den 1 bis n hyperspektralen Referenzbildern vorkommenden Farbwerte als dekorspezifische Farbwerte abgebildet werden, und wobei die dekorspezifischen Farbwerte der digitalen Vorlage der analogen Dekorvorlage in Farbfeldern dargestellt werden;
c) Erstellen einer digitalen Vorlage der analogen Dekorvorlage (21) durch einscannen oder fotografieren der analogen Dekorvorlage (10) mit einem digitalen Fotoapparat oder einer Digitalkamera;
d) Erstellen eines dekorspezifischen Profiltargets (31) aus der digitalen Vorlage der analogen Dekorvorlage (21) durch eine Recheneinheit, wobei ein oder mehrere Ausschnitte der digitalen Vorlage der analogen Dekorvorlage (21) verwendet werden, die einen identischen Ausschnitt oder identische Ausschnitte des Dekors wie die 1 bis n digitalen hyperspektralen Referenzbilder abbilden; und
wobei das dekorspezifische Profiltarget (31) die dekorspezifischen Farbwerte der digitalen Vorlage der analogen Dekorvorlage (21) beinhaltet, wobei die am häufigsten in der digitalen Vorlage der analogen Dekorvorlage (21) ermittelten Farbwerte die dekorspezifischen Farbwerte der digitalen Vorlage der analogen Dekorvorlage (21) bilden, und wobei die dekorspezifischen Farbwerte der digitalen Vorlage der analogen Dekorvorlage (21) in Farbfeldern dargestellt werden;
e) Berechnen und anschließendes Speichern eines korrigierten dekorspezifischen Profiltargets aus dem dekorspezifischen Referenztarget (30) und dem dekorspezifischen Profiltarget (31) durch Vergleichen der Farbwerte der Farbfelder des dekorspezifischen Profiltargets mit den Farbwerten der Farbfelder des dekorspezifischen Referenztargets und Korrektur der Farbwerte der Farbfelder des dekorspezifischen Profiltargets, die vom Farbwert des zugeordneten Farbfeldes des dekorspezifischen Referenztargets abweichen derart, dass die Farbwerte des korrigierten dekorspezifischen Profiltargets den Farbwerten des dekorspezifischen Referenztargets (30) entsprechen;
f) Ausgeben der digitalen Vorlage der analogen Dekorvorlage (21) unter Berücksichtigung des korrigierten dekorspezifischen Profiltargets auf ein Trägermaterial durch ein Ausgabegerät (13);
g) Erzeugen von 1 bis n hyperspektralen digitalen Ist-Bildern von dem dekorversehenen Trägermaterial (14), wobei die 1 bis n hyperspektralen digitalen Ist-Bilder von den gleichen Ausschnitten des Dekors aufgenommen werden, wie die 1 bis n hyperspektralen digitalen Referenzbilder;
h) Ermittlung einer Farbabweichungen und eines Ähnlichkeitsindex zwischen mindestens einem der 1 bis n hyperspektralen digitalen Ist-Bilder des dekorversehenen Trägermaterials (14) und mindestens einem der 1 bis n hyperspektralen digitalen Referenzbilder, wobei der Ähnlichkeitsvergleich immer zwischen einem Bildpaar stattfindet, welches von einem Ist-Bild und einem Referenzbild gebildet wird, welche einen identischen Ausschnitt des Dekors abbilden; und
i) Anpassen des korrigierten dekorspezifischen Profiltargets unter Berücksichtigung der ermittelten Farbabweichungen wenn der Ähnlichkeitsindex unterhalb eines vorgegebenen Sollwertes liegt indem die Farbwerte im korrigierten dekorspezifischen Profiltarget unter Berücksichtigung der im Ähnlichkeitsvergleich ermittelten Farbabweichungen geändert werden; Speichern des angepassten korrigierten dekorspezifischen Profiltargets und anschließendes Ausgeben der digitalen Vorlage der analogen Dekorvorlage (21) unter Berücksichtigung des angepassten korrigierten dekorspezifischen Profiltargets auf ein Trägermaterial durch ein Ausgabegerät (13), wobei die gleiche Art Trägermaterial und das gleiche Ausgabegerät verwendet wird wie in Verfahrensschritt f) und wiederholen der Schritte g) bis i);
wobei eine Anpassung des korrigierten dekorspezifischen Profiltargets gemäß Verfahrensschritt i) so lange durchgeführt wird, bis der Ähnlichkeitsindex zwischen mindestens einem der 1 bis n hyperspektralen digitalen Ist-Bildern und mindestens einem der 1 bis n hyperspektralen digitalen Referenzbilder oberhalb eines vorgegebenen Sollwertes liegt; und
wobei der Sollwert im Bereich von 75% bis 100% liegt.

2. Verfahren nach einem der vorangegangenen Ansprüche, **dadurch gekennzeichnet, dass** die 1 bis n Referenzbilder einen Ausschnitt oder Ausschnitte der analogen Dekorvorlage (10) abbilden, die für das Dekor charakteristisch sind.

3. Verfahren nach einem der vorherigen Ansprüche, **dadurch gekennzeichnet, dass** die Ausgabe der digitalisierten Vorlage der analogen Dekorvorlage (21) gemäß Verfahrensschritten f) mittels digitalem Druck erfolgt.

4. Verfahren nach einem der vorherigen Ansprüche, **dadurch gekennzeichnet, dass** die digitale Vorlage der analogen Dekorvorlage in Verfahrensschritt f) auf ein Trägermaterial ausgegeben wird, welches ausgewählt ist aus einer Gruppe enthaltend Papier, Glas, Metall, Folien, Holzwerkstoffe, insbesondere MDF- oder HDF-Platten, WPC-Platten, Furniere, Lackschichten, Kunststoffplatten und anorganische Trägerplatten.

5. Verfahren nach einem der vorherigen Ansprüche, **dadurch gekennzeichnet, dass** das korrigierte dekorspezifische Profiltarget oder das angepasste korrigierte Profiltarget, mit dem in dem Verfahrensschritt f) ein dekorversehenes Trägermaterial (14) erzeugt wird, dessen im Verfahrensschritt h) ermittelter Ähnlichkeitsindex zwischen mindestens einem der 1 bis n Ist-Bilder des dekorversehenen Trägermaterials (14) und mindestens einem der 1 bis n Referenzbilder oberhalb eines vorgegebenen Sollwertes liegt, als digitales Urmuster der analogen Dekorvorlage (10) gespeichert wird.

6. Verfahren nach Anspruch 5, **dadurch gekennzeichnet, dass** aus dem Urmuster ein digitales Urmusterprofiltarget und ein korrigiertes Urmusterprofiltarget erzeugen werden, umfassend die Schritte:
• Erstellen eines digitalen Urmusterprofiltargets;
• Ausgabe des digitalen Urmusterprofiltargets mit einem Ausgabegerät auf ein Trägermaterial;
• Erzeugen von 1 bis n hyperspektralen digitalen Bildern des mit dem Urmusterprofiltaget versehenen Trägermaterials;
• Bestimmen der Farbwerte des auf das Trägermaterial ausgegebenen Urmusterprofiltargets aus den 1 bis n digitalen hyperspektralen Bildern;
• Ermitteln der Farbabweichungen zwischen den Farbwerten der Farbfelder des digital vorliegenden Urmusterprofiltargets und den Farbwerten der Farbfelder des auf das Trägermaterial ausgegebenen Urmusterprofiltargets;
• Erzeugen und Speichern eines korrigierten Urmusterprofiltargets unter Berücksichtigung der ermittelten Farbabweichungen.

7. Vorrichtung zur Übernahme analoger Dekorvorlagen (10) in den Dekordruck, wobei die Vorrichtung dazu eingerichtet ist, ein Verfahren gemäß einem der Ansprüche 1 bis 6 durchzuführen,
umfassend
- mindestens ein Mittel zum Erzeugen und Speichern von 1 bis n hyperspektralen digitalen Bildern (11, 15), ausgewählt aus einem Hyperspektralscanner oder einer Hyperspektralkamera;
- mindestens eine Recheneinheit zum Erstellen und Speichern eines dekorspezifischen Referenztargets;
- mindestens ein Mittel zur Erzeugung und Speicherung einer digitalen Vorlage (20) der analogen Dekorvorlage, ausgewählt aus einem digitalen Fotoapparat oder einer Digitalkamera;
- mindestens eine Recheneinheit zum Erstellen und Speichern eines dekorspezifischen Profiltargets;
- mindestens eine Recheneinheit zum Berechnen und Speichern eines korrigierten dekorspezifischen Profiltargets;
- mindestens ein Mittel zum Ausgeben der digitalisierten Vorlage der analogen Dekorvorlage unter Berücksichtigung eines korrigierten dekorspezifischen Profiltargets oder eines angepassten korrigierten dekorspezifischen Profiltargets ausgewählt aus einer Vorrichtung für den direkten oder indirekten Digitaldruck;
- mindestens eine Recheneinheit zur Ermittlung der Farbabweichung und eines Ähnlichkeitsindex zwischen mindestens einem der 1 bis n hyperspektralen digitalen Referenzbilder und mindestens einem der 1 bis n hyperspektralen digitalen Ist-Bilder; und
- mindestens eine Recheneinheit zur Anpassung des korrigierten dekorspezifischen Profiltargets unter Berücksichtigung des ermittelten Ähnlichkeitsindex zwischen mindestens einem der 1 bis n hyperspektralen digitalen Referenzbilder und mindestens einem der 1 bis n hyperspektralen digitalen Ist-Bilder.

## Claims

1. Method for adopting analog decor templates (10) in decor printing, comprising a similarity comparison between at least one of 1 to n hyperspectral digital reference images of an analog decor template and at least one of 1 to n hyperspectral digital actual images of a decorative substrate (14), n being between 1 and 100,
**characterized in that** the method comprises the steps of:
a) capturing and storing 1 to n hyperspectral digital reference images of the entire analog decor template or 1 to n portions of the analog decor template using a hyperspectral camera or a hyperspectral scanner, each hyperspectral digital reference image having a hyperspectral data cube which has two spatial and one spectral dimension;
b) creating a decor-specific reference target (30) from the 1 to n hyperspectral digital reference images, the creation of a decor-specific reference target (30) from the 1 to n hyperspectral digital reference images comprising the composition of the individual hyperspectral digital reference images using graphics software if n>1, and the decor-specific reference target (30) containing the decor-specific color values of the analog print template, the color values occurring most frequently in the 1 to n hyperspectral reference images being depicted as decor-specific color values, and the decor-specific color values of the digital template of the analog decor template being represented in color fields;
c) creating a digital template of the analog decor template (21) by scanning or photographing the analog decor template (10) using a digital photo apparatus or a digital camera;
d) creating a decor-specific profile target (31) from the digital template of the analog decor template (21) by means of a computing unit, one or more portions of the digital template of the analog decor template (21) being used, which portions depict an identical portion or identical portions of the decor as the 1 to n digital hyperspectral reference images; and
the decor-specific profile target (31) containing the decor-specific color values of the digital template of the analog decor template (21), the color values most frequently determined in the digital template of the analog decor template (21) forming the decor-specific color values of the digital template of the analog decor template (21), and the decor-specific color values of the digital template of the analog decor template (21) being represented in color fields;
e) calculating and subsequently storing a corrected decor-specific profile target from the decor-specific reference target (30) and the decor-specific profile target (31) by comparing the color values of the color fields of the decor-specific profile target with the color values of the color fields of the decor-specific reference target and correcting the color values of the color fields of the decor-specific profile target that deviate from the color value of the associated color field of the decor-specific reference target such that the color values of the corrected decor-specific profile target correspond to the color values of the decor-specific reference target (30);
f) outputting the digital template of the analog decor template (21) onto a substrate by means an output device (13), taking into account the corrected decor-specific profile target;
g) generating 1 to n hyperspectral digital actual images of the decorative substrate (14), the 1 to n hyperspectral digital actual images being captured from the same portions of the decor as the 1 to n hyperspectral digital reference images;
h) determining a color deviation and a similarity index between at least one of the 1 to n hyperspectral digital actual images of the decorative substrate (14) and at least one of the 1 to n hyperspectral digital reference images, the similarity comparison always taking place between an image pair which is formed by an actual image and a reference image which depicts an identical portion of the decor; and
i) adjusting the corrected decor-specific profile target, taking into account the determined color deviations, if the similarity index is below a predetermined target value by changing the color values in the corrected decor-specific profile target, taking into account the color deviations determined in the similarity comparison; storing the adjusted, corrected decor-specific profile target and subsequently outputting the digital template of the analog decor template (21) onto a substrate by means of an output device (13), taking into account the adjusted, corrected decor-specific profile target, the same type of substrate and the same output device being used as in method step f), and repeating steps g) to i);
an adjustment of the corrected decor-specific profile target according to method step i) being carried out until the similarity index between at least one of the 1 to n hyperspectral digital actual images and at least one of the 1 to n hyperspectral digital reference images is above a predetermined target value; and
the target value being in the range of 75% to 100%.

2. Method according to any of the preceding claims, **characterized in that** the 1 to n reference images depict a portion or portions of the analog decor template (10) which are characteristic of the decor.

3. Method according to either of the preceding claims, **characterized in that** the output of the digitized template of the analog decor template (21) according to method steps f) is carried out by means of digital printing.

4. Method according to any of the preceding claims, **characterized in that** the digital template of the analog decor template is output, in method step f), onto a substrate which is selected from a group consisting of paper, glass, metal, foils, wood materials, in particular MDF or HDF boards, WPC boards, veneers, lacquer layers, plastic boards and inorganic carrier boards.

5. Method according to any of the preceding claims, **characterized in that** the corrected decor-specific profile target or the adjusted corrected profile target, with which a decorative substrate (14) is generated in method step f), which has a similarity index, determined in method step h), between at least one of the 1 to n actual images of the decorative substrate (14) and at least one of the 1 to n reference images that is above a predetermined target value, is stored as a digital master sample of the analog decor template (10).

6. Method according to claim 5, **characterized in that**, from the master sample, a digital master sample profile target and a corrected master sample profile target are generated, comprising the steps of:
• creating a digital master sample profile target;
• outputting the digital master sample profile target onto a substrate by means of an output device;
• generating 1 to n hyperspectral digital images of the substrate provided with the master sample profile target;
• determining the color values of the master sample profile target output onto the substrate from the 1 to n digital hyperspectral images;
• determining the color deviations between the color values of the color fields of the digitally available master sample profile target and the color values of the color fields of the master sample profile target output onto the substrate;
• creating and storing a corrected master sample profile target, taking into account the determined color deviations.

7. Apparatus for adopting analog decor templates (10) in decor printing, the apparatus being designed to carry out a method according to any of claims 1 to 6,
comprising
- at least one means for generating and storing 1 to n hyperspectral digital images (11, 15) selected from a hyperspectral scanner or a hyperspectral camera;
- at least one computing unit for creating and storing a decor-specific reference target;
- at least one means for generating and storing a digital template (20) of the analog decor template, selected from a digital photo apparatus or a digital camera;
- at least one computing unit for creating and storing a decor-specific profile target;
- at least one computing unit for calculating and storing a corrected decor-specific profile target;
- at least one means for outputting the digitized template of the analog decor template, taking into account a corrected decor-specific profile target or an adjusted corrected decor-specific profile target, selected from an apparatus for direct or indirect digital printing;
- at least one computing unit for determining the color deviation and a similarity index between at least one of the 1 to n hyperspectral digital reference images and at least one of the 1 to n hyperspectral digital actual images; and
- at least one computing unit for adjusting the corrected decor-specific profile target, taking into account the determined similarity index between at least one of the 1 to n hyperspectral digital reference images and at least one of the 1 to n hyperspectral digital actual images.

## Revendications

1. Procédé permettant de transférer des modèles de décoration analogiques (10) dans l'impression de décoration, comprenant une comparaison de similitude entre au moins l'une parmi 1 à n images de référence numériques hyperspectrales d'un modèle de décoration analogique et au moins l'une parmi 1 à n images réelles numériques hyperspectrales d'un matériau de support (14) pourvu d'une décoration, dans lequel n est compris entre 1 et 100,
**caractérisé en ce que** le procédé comprend les étapes consistant à :
a) capturer et stocker 1 à n images de référence numériques hyperspectrales de l'ensemble du modèle de décoration analogique ou 1 à n sections du modèle de décoration analogique avec une caméra hyperspectrale ou un scanner hyperspectral, dans lequel chaque image de référence numérique hyperspectrale présente un cube de données hyperspectral comportant deux dimensions spatiales et une dimension spectrale ;
b) créer une cible de référence spécifique à la décoration (30) à partir des 1 à n images de référence numériques hyperspectrales, dans lequel la création d'une cible de référence spécifique à la décoration (30) à partir des 1 à n images de référence numériques hyperspectrales comprend l'assemblage des différentes images de référence numériques hyperspectrales au moyen d'un logiciel graphique, lorsque n > 1, et dans lequel la cible de référence spécifique à la décoration (30) contient les valeurs chromatiques spécifiques à la décoration du modèle d'impression analogique, dans lequel les valeurs chromatiques apparaissant le plus souvent dans les 1 à n images de référence hyperspectrales sont représentées comme des valeurs chromatiques spécifiques à la décoration, et dans lequel les valeurs chromatiques spécifiques à la décoration du modèle numérique du modèle de décoration analogique sont représentées dans des champs chromatiques ;
c) créer un modèle numérique du modèle de décoration analogique (21) en scannant ou en photographiant le modèle de décoration analogique (10) avec un appareil photo numérique ou une caméra numérique ;
d) créer une cible de profil spécifique à la décoration (31) à partir du modèle numérique du modèle de décoration analogique (21) par une unité de calcul, dans lequel une ou plusieurs sections du modèle numérique du modèle de décoration analogique (21) sont utilisées, lesquelles représentent une section identique ou des sections identiques de la décoration comme les 1 à n images de référence hyperspectrales numériques ; et
dans lequel la cible de profil spécifique à la décoration (31) contient les valeurs chromatiques spécifiques à la décoration du modèle numérique du modèle de décoration analogique (21), dans lequel les valeurs chromatiques déterminées le plus souvent dans le modèle numérique du modèle de décoration analogique (21) forment les valeurs chromatiques spécifiques à la décoration du modèle numérique du modèle de décoration analogique (21), et dans lequel les valeurs chromatiques spécifiques à la décoration du modèle numérique du modèle de décoration analogique (21) sont représentées dans des champs chromatiques ;
e) calculer puis stocker une cible de profil spécifique à la décoration corrigée à partir de la cible de référence spécifique à la décoration (30) et de la cible de profil spécifique à la décoration (31) en comparant les valeurs chromatiques des champs chromatiques de la cible de profil spécifique à la décoration avec les valeurs chromatiques des champs chromatiques de la cible de référence spécifique à la décoration et en corrigeant les valeurs chromatiques des champs chromatiques de la cible de profil spécifique à la décoration qui diffèrent de la valeur chromatique du champ chromatique associé de la cible de référence spécifique à la décoration, de telle sorte que les valeurs chromatiques de la cible de profil spécifique à la décoration corrigée correspondent aux valeurs chromatiques de la cible de référence spécifique à la décoration (30) ;
f) délivrer en sortie le modèle numérique du modèle de décoration analogique (21) en tenant compte de la cible de profil spécifique à la décoration corrigée sur un matériau de support par un appareil de sortie (13) ;
g) générer 1 à n images réelles numériques hyperspectrales à partir du matériau de support (14) pourvu de la décoration, dans lequel les 1 à n images réelles numériques hyperspectrales sont capturées à partir des mêmes sections de la décoration que les 1 à n images de référence numériques hyperspectrales ;
h) déterminer un écart chromatique et un indice de similitude entre au moins l'une des 1 à n images réelles numériques hyperspectrales du matériau de support (14) pourvu de la décoration et au moins l'une des 1 à n images de référence numériques hyperspectrales, dans lequel la comparaison de similitude a toujours lieu entre une paire d'images qui est formée par une image réelle et une image de référence, lesquelles représentent une section identique de la décoration ; et
i) adapter la cible de profil spécifique à la décoration corrigée en tenant compte des écarts chromatiques déterminés lorsque l'indice de similitude est inférieur à une valeur de consigne prédéfinie en modifiant les valeurs chromatiques dans la cible de profil spécifique à la décoration corrigée en tenant compte des écarts chromatiques déterminés dans la comparaison de similitude ; stocker la cible de profil spécifique à la décoration corrigée et adaptée et ensuite délivrer en sortie le modèle numérique du modèle de décoration analogique (21) en tenant compte de la cible de profil spécifique à la décoration corrigée et adaptée sur un matériau de support par un appareil de sortie (13), dans lequel le même type de matériau de support et le même appareil de sortie que ceux utilisés à l'étape de procédé f) sont utilisés et répéter les étapes g) à i) ;
dans lequel une adaptation de la cible de profil spécifique à la décoration corrigée selon l'étape de procédé i) est effectuée jusqu'à ce que l'indice de similitude entre au moins l'une des 1 à n images réelles numériques hyperspectrales et au moins l'une des 1 à n images de référence numériques hyperspectrales soit supérieur à une valeur de consigne prédéfinie ; et
dans lequel la valeur de consigne se situe dans la plage allant de 75 % à 100 %.

2. Procédé selon l'une des revendications précédentes,
**caractérisé en ce que** les 1 à n images de référence reproduisent une section ou des sections du modèle de décoration analogique (10) qui caractérisent le décor.

3. Procédé selon l'une des revendications précédentes,
**caractérisé en ce que** la sortie du modèle numérique du modèle de décoration analogique (21) selon les étapes de procédé f) est effectuée au moyen d'une impression numérique.

4. Procédé selon l'une des revendications précédentes,
**caractérisé en ce que** le modèle numérique du modèle de décoration analogique est délivré en sortie à l'étape de procédé f) sur un matériau de support qui est choisi dans un groupe contenant papier, verre, métal, feuilles, matériaux en bois, en particulier panneaux MDF ou HDF, panneaux WPC, placages, couches de laque, panneaux en matière plastique et panneaux de support inorganiques.

5. Procédé selon l'une des revendications précédentes,
**caractérisé en ce que** la cible de profil spécifique à la décoration corrigée ou la cible de profil corrigée adaptée, avec laquelle un matériau de support (14) pourvu de la décoration est généré à l'étape de procédé f), dont l'indice de similitude déterminé à l'étape de procédé h) entre au moins l'une des 1 à n images réelles du matériau de support (14) pourvu de la décoration et au moins l'une des 1 à n images de référence est supérieur à une valeur de consigne prédéfinie, est stockée en tant que modèle initial numérique du modèle de décoration analogique (10).

6. Procédé selon la revendication 5, **caractérisé en ce que**, à partir du modèle initial, une cible de profil de modèle initial numérique et une cible de profil de modèle initial corrigée sont générées, comprenant les étapes consistant à :
• créer une cible numérique de profil de modèle initial ;
• délivrer en sortie la cible numérique de profil de modèle initial sur un matériau de support à l'aide d'un appareil de sortie ;
• générer 1 à n images numériques hyperspectrales du matériau de support pourvu de la cible de profil de modèle initial ;
• déterminer les valeurs chromatiques de la cible de profil de modèle initial délivrée en sortie sur le matériau de support à partir des 1 à n images hyperspectrales numériques ;
• déterminer les écarts chromatiques entre les valeurs chromatiques des champs chromatiques de la cible de profil de modèle initial présente sous forme numérique et les valeurs chromatiques des champs chromatiques de la cible de profil de modèle initial délivrée en sortie sur le matériau de support ;
• créer et stocker une cible de profil de modèle initial corrigée en tenant compte des écarts chromatiques déterminés.

7. Dispositif permettant de transférer des modèles de décoration analogiques (10) dans l'impression de décoration, dans lequel le dispositif est configuré pour mettre en oeuvre un procédé selon l'une des revendications 1 à 6,
comprenant
- au moins un moyen permettant de générer et de stocker 1 à n images numériques hyperspectrales (11, 15), choisi parmi un scanner hyperspectral ou une caméra hyperspectrale ;
- au moins une unité de calcul permettant de créer et de stocker une cible de référence spécifique à la décoration ;
- au moins un moyen permettant de générer et de stocker un modèle numérique (20) du modèle décoratif analogique, choisi parmi un appareil photo numérique ou une caméra numérique ;
- au moins une unité de calcul permettant de créer et de stocker une cible de profil spécifique à la décoration ;
- au moins une unité de calcul permettant de calculer et de stocker une cible de profil spécifique à la décoration corrigée ;
- au moins un moyen permettant de délivrer en sortie le modèle numérisé du modèle de décoration analogique en tenant compte d'une cible de profil spécifique à la décoration corrigée ou d'une cible de profil spécifique à la décoration corrigée et adaptée choisi parmi un dispositif pour l'impression numérique directe ou indirecte ;
- au moins une unité de calcul permettant de déterminer l'écart chromatique et un indice de similitude entre au moins l'une des 1 à n images de référence numériques hyperspectrales et au moins l'une des 1 à n images réelles numériques hyperspectrales ; et
- au moins une unité de calcul permettant d'adapter la cible de profil spécifique à la décoration corrigée en tenant compte de l'indice de similitude déterminé entre au moins l'une des 1 à n images de référence numériques hyperspectrales et au moins l'une des 1 à n images réelles numériques hyperspectrales.
